(19) Europäisches Patentamt
European Patent Office
Office européen des brevets

(11) EP 3 046 947 B1

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(21) Anmeldenummer: **14771243.4**

(22) Anmeldetag: **15.09.2014**

(51) Int Cl.:
***C08G 64/02*** (2006.01) ***C08G 64/34*** (2006.01)
***C08G 65/26*** (2006.01) ***C08G 18/44*** (2006.01)

(86) Internationale Anmeldenummer:
**PCT/EP2014/069578**

(87) Internationale Veröffentlichungsnummer:
**WO 2015/039981 (26.03.2015 Gazette 2015/12)**

(54) **VERZWEIGTE POLYETHERCARBONATPOLYOLE UND VERFAHREN ZU DEREN HERSTELLUNG**

BRANCHED POLYETHER CARBONATE POLYOLS AND METHOD FOR THEIR PREPARATION

POLYOLS DE POLYÉTHERCARBONATES RAMIFIÉS ET LEUR PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013 EP 13185411**

(43) Veröffentlichungstag der Anmeldung:
**27.07.2016 Patentblatt 2016/30**

(73) Patentinhaber: **Covestro Deutschland AG**
**51373 Leverkusen (DE)**

(72) Erfinder:
- **MÜLLER, Thomas Ernst**
**52074 Aachen (DE)**
- **GÜRTLER, Christoph**
**50735 Köln (DE)**
- **SUBHANI, Muhammad Afzal**
**52066 Aachen (DE)**
- **KOEHLER, Burkhard**
**34289 Zierenberg (DE)**

(74) Vertreter: **Levpat**
**c/o Covestro AG**
**Gebäude 4825**
**51365 Leverkusen (DE)**

(56) Entgegenhaltungen:
**WO-A1-2008/092767 US-A1- 2012 065 360**

- **DATABASE WPI Week 201356 Thomson Scientific, London, GB; AN 2013-B14718 XP002719944, & CN 102 746 503 A (UNIV ZHANJIANG NORMAL) 24. Oktober 2012 (2012-10-24)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 046 947 B1

## Beschreibung

Die vorliegende Erfindung betrifft ein Verfahren zur Herstellung verzweigter Polyethercarbonatpolyole, umfassend den Schritt der Umsetzung eines Alkylenoxids und Kohlendioxid mit einer H-funktionellen Starterverbindung in Gegenwart eines Katalysators, wobei die Umsetzung weiterhin in Gegenwart einer Verzweigerverbindung durchgeführt wird, welche eine durch Ringöffnung polymerisierbare funktionelle Gruppe sowie eine H-funktionelle Gruppe umfasst. Sie betrifft weiterhin ein nach dem erfindungsgemäßen Verfahren herstellbares Polyethercarbonatpolyol sowie hierauf basierende vernetzte Polyethercarbonat-Polymere.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonatpolyole durch eine katalytische Umsetzung von Alkylenoxiden und Kohlendioxid in Anwesenheit H-funktioneller Starterverbindungen ("Starter") erhalten. Eine allgemeine Reaktionsgleichung hierfür ist:

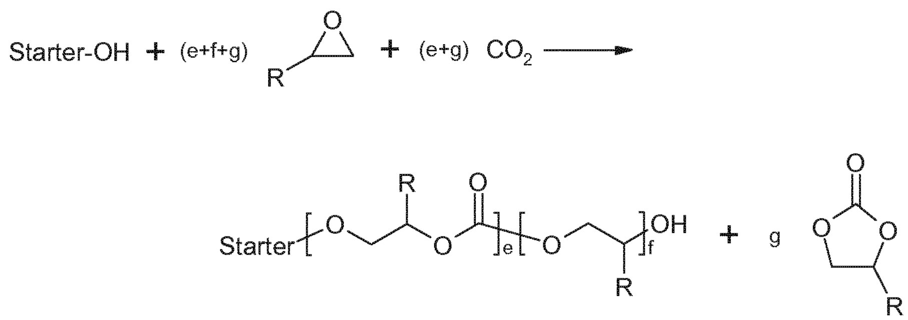

Als weiteres Produkt, hier ein unerwünschtes Nebenprodukt, entsteht neben dem Polyethercarbonatpolyol ein cyclisches Carbonat (beispielsweise für R = $CH_3$ Propylencarbonat).

In der Literatur werden einige unterschiedliche Herstellvarianten beschrieben. So beschreibt zum Beispiel US 2010/0048935 A1 ein Verfahren zur Herstellung von Polyethercarbonatpolyolen durch Umsetzung von Alkylenoxiden und Kohlendioxid mit H-funktionellen Starterverbindungen mittels eines DMC-Katalysators, in welchem eine oder mehrere Starterverbindungen in einem Reaktor vorgelegt und des Weiteren eine oder mehrere Starterverbindungen kontinuierlich im Laufe der Reaktion zudosiert werden. Als ein mögliches Alkylenoxid wird epoxidiertes Sojaöl erwähnt. Die Reaktivität dieser Oxiranringe ist jedoch gering, da sie im Inneren einer Kette liegen und sterisch stark abgeschirmt sind. Daher wird das epoxidierte Sojaöl langsamer umgesetzt als übliche Monomere, wie Propylenoxid, und reichert sich in der Reaktionsmischung an. Da epoxidiertes Sojaöl zudem eine Mischung mehrfach epoxidierter Verbindungen darstellt, ist ein gezielter Aufbau definierter Polymerarchitekturen nicht möglich.

WO 2006/103213 A1 hingegen beschreibt ein Verfahren zur Herstellung von Polyethercarbonatpolyolen mit verbesserten Einbau von $CO_2$ in das Polyethercarbonatpolyol unter Verwendung eines Katalysator aufweisend ein Multimetall-Cyanid. Die Schrift offenbart die Anwesenheit einer H-funktionellen Starterverbindung, eines Alkylenoxides und Kohlendioxid in Gegenwart der Multimetall-Cyanid-Komponente in einem Reaktor. Des Weiteren offenbart das Dokument die Anwesenheit einer $CO_2$-philen Substanz oder $CO_2$-philer Substituenten. Die $CO_2$-phile Substanz oder der $CO_2$-phile Substituent soll den Einbau des $CO_2$ in das Polyethercarbonatpolyol erleichtern und derart die Bildung cyclischer Alkylencarbonate, wie zum Beispiel Propylencarbonat, welche unerwünschte Nebenprodukte darstellen, reduzieren.

In WO 2012/130760 wird der Einsatz von höherfunktionellen Alkoholen als Starterverbindung in der Umsetzung von Alkylenoxiden mit $CO_2$ zu Polyethercarbonaten unter Katalyse mit Doppelmetallcyaniden (DMC) genannt. Mit höherfunktionellen Starterverbindungen hergestellte Polyethercarbonatpolyole weisen bei gleicher OH-Zahl eine mit der Funktionalität steigende Viskosität auf. So beschreibt EP 12181907 für ein Polyethercarbonat, das unter Verwendung von Glycerin als trifunktioneller Starterverbindung erhalten wurde, eine deutlich erhöhte Viskosität (36,0 Pa.s) im Vergleich mit einem Polyethercarbonat, das unter Verwendung von Dipropylenglykol als bifunktionelle Starterverbindung erhalten wurde (4,1 Pa.s).

Ein Einsatz von Glycidol als Comonomer in der Herstellung von Polyethern wird beispielsweise in GB1586520 beschrieben. So kann ein dort beschriebenes Polymer ein Copolymer von einem Alkylenoxid und Glycidol und gegebenenfalls einem Glycidylester einer Fettsäure oder einer Polycarbonsäure sein. Als Katalysatoren für die Herstellung solcher Polyether werden saure Verbindungen, bevorzugt Sulfonsäuren eingesetzt. Die Verwendung von $CO_2$ als Comonomer ist nicht genannt.

Die Funktionalität der erhaltenen Polyethercarbonatpolyole wird durch die Funktionalität des als Starterverbindung eingesetzten Alkohols bestimmt. Solche Starterverbindungen müssen oft in einem separaten Schritt synthetisiert werden. Die Synthese der Starterverbindungen aus einem niedermolekularen Polyalkohol und einem Alkylenoxid erfolgt meist unter Verwendung von Basen als Katalysator. Vor einer Verwendung dieser Starterverbindungen in einer Katalyse mit DMC-Katalysatoren müssen diese aufwendig von basischen Katalysatorresten gereinigt, um eine Desaktivierung des Katalysators zu vermeiden. Jedoch ist die Viskosität der erhaltenen Produkte häufig dennoch erhöht.

In keinem der genannten Dokumente wird ausgeführt, wie eine herabgesetzte Aktivität bzw. eine Deaktivierung des eingesetzten DMC-Katalysators durch Glycidol vermieden werden kann. Auswirkungen auf die Viskosität der erhaltenen Produktgemische und die Reaktivität der OH-Gruppen werden nicht diskutiert.

Wünschenswert wäre daher ein Verfahren zur Herstellung von niederviskosen verzweigten und somit höherfunktionellen Polyethercarbonatpolyolen, die eine möglichst hohe Reaktivität der Endgruppen und eine rasche Aushärtung in der anschließenden Umsetzung mit Vernetzungsreagenzien zeigen. Dadurch werden neue Anwendungsfelder für solche verzweigte Polyethercarbonatpolyole erschlossen.

Die vorliegende Erfindung hat sich die Aufgabe gestellt, ein solches Verfahren bereitzustellen. Erfindungsgemäß gelöst wird diese Aufgabe durch ein Verfahren zur Herstellung verzweigter Polyethercarbonatpolyole, umfassend den Schritt der Umsetzung eines Alkylenoxids und Kohlendioxid mit einer H-funktionellen Startemerbindung in Gegenwart eines Katalysators, wobei die Umsetzung weiterhin in Gegenwart einer Verzweigerverbindung durchgeführt wird, welche eine durch Ringöffnung polymerisierbare funktionelle Gruppe sowie eine H-funktionelle Gruppe umfasst und wobei die Verzweigerverbindung während der Umsetzung derart hinzugefügt wird, dass der Anteil der Verzweigerverbindung im erhaltenen Reaktionsgemisch zu jedem Zeitpunkt während des Hinzufügens $\leq$ 7,5 Gewichts-%, bezogen auf die Menge an zu diesem Zeitpunkt zugegebener H-funktioneller Starterverbindung, Alkylenoxid und Verzweigerverbindung, beträgt.

Überraschenderweise wurde gefunden, dass sich verzweigte Polyethercarbonatpolyole herstellen lassen, wobei der Einbau eines Verzweigermoleküls während der Polymerisationsreaktion jeweils zu einer Verzweigung der Polymerkette unter Einführung einer weiteren funktionellen Endgruppe führt. Eine Vergelung des Reaktionsgemisches kann durch Einsatz von Verzweigerverbindungen, welche genau eine durch Ringöffnung polymerisierbare funktionelle Gruppe sowie mindestens eine H-funktionelle Gruppe je Molekül umfassen, vermieden werden. Die durchschnittliche Funktionalität des erhaltenen Polyethercarbonatpolyols kann durch die eingesetzte Menge der Verzweigerverbindung eingestellt werden. Weiterhin weisen die erhaltenen Polyethercarbonatpolyole eine überraschend geringe Viskosität und eine hohe Reaktivität der H-funktionellen (Zerewitinoff-aktiven) Endgruppen gegenüber Isocyanaten auf.

Bedingt durch die Art der Verzweigungen im Polymer können die nach dem erfindungsgemäßen Verfahren erhältlichen Polyethercarbonatpolyole, ohne hierauf beschränkt zu sein, als "sternförmig verzweigt", "hochverzweigt“ oder "dendrimer" beschrieben werden.

Geeignete Alkylenoxide (Epoxide) sind beispielsweise eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, einfach epoxidierte Fette als Mono-, Di- und Triglyceride, einfach epoxidierte Fettsäuren, C1-C24-Ester von einfach epoxidierten Fettsäuren, einfach epoxidierte Derivate des Glycidols wie beispielsweise Methylglycidylether, Ethylglycidylether, 2-Ethylhexylglycidylether, Allylglycidylether, Glycidylmethacrylat sowie epoxyfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropylmethyl-dimethoxysilan, 3-Glycidyloxypropylethyldiethoxysilan oder 3-Glycidyloxypropyltriisopropoxysilan.

Als geeignete H-funktionelle Staitenerbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$ bevorzugt sind -OH und -CH2, besonders bevorzugt ist -OH. Als H-funktionelle Starterverbindung wird beispielsweise eine oder mehrere Verbindungen ausgewählt aus der Gruppe bestehend aus ein- oder mehrwertige Alkohole, mehrwertige Amine, mehrwertige Thiole, Aminoalkohol, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofwanamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens

2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohol, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, *tert*-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z.B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausfuhrungsform der Erfindung können Polyethercarbonatpolyole als H-funktionelle Starterverbindungen eingesetzt werden. Insbesondere werden Polyethercarbonatpolyole, die nach dem hier beschriebenen

erfindungsgemäßen Verfahren erhältlich sind, eingesetzt. Diese als H-funktionelle Starterverbindungen eingesetzten Polyethercarbonatpolyole werden hierzu in einem separaten Reaktionsschritt zuvor hergestellt.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole der allgemeinen Formel:

$$HO-(CH_2)_x-OH$$

wobei x eine Zahl von 1 bis 20, bevorzugt eine ganze Zahl von 2 bis 20 ist. Beispiele für Alkohole gemäß obiger Formel sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß obiger Formel mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, und Polyethercarbonatpolyole eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-l,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid sowie di- und trifunktionelle Polyethercarbonatpolyole, wobei das Polyethercarbonatpolyol aus einer di- oder tri-H-funktionellen Starterverbindung, Kohlendioxid und Propylenoxid und/oder Ethylenoxid aufgebaut ist. Die Polyetherpolyole und Polyethercarbonatpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Als Katalysator kann ein DMC-Katalysator (Doppel-Metall-Cyanid-Katalysator) eingesetzt werden. Es können zusätzlich oder alternativ auch andere Katalysatoren für die Copolymerisation von Alkylenoxiden und $CO_2$ wie Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Es ist erfindungsgemäß ebenfalls vorgesehen, dass die Umsetzung zu Polyethercarbonatpolyolen weiterhin in Gegenwart einer Verzweigerverbindung durchgeführt wird, welche eine durch Ringöffnung polymerisierbare funktionelle Gruppe sowie eine H-funktionelle Gruppe umfasst.

Vorzugsweise enthalten die Verzweigerverbindungen genau eine polymerisierbare Gruppe sowie mindestens eine Zerewitinoff-aktive Starter-Funktion. Dann ist keine Vergelung des Reaktionsgemisches bei der Herstellung der Polyethercarbonatpolyole zu erwarten.

Beispiele für durch Ringöffnung polymerisierbare funktionelle Gruppen in der Verzweigerverbindung sind Epoxide, Oxetane, Aziridine, aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatische cyclische Anhydride.

Für die Alkoxylierung geeignete funktionelle Gruppen mit aktiven H-Atomen in der Verzweigerverbindung (H-funktionelle Gruppen) sind insbesondere -OH, $-NH_2$ (primäre Amine), - NH- (sekundäre Amine), -SH, $-CO_2H$ und ß-Dicarbonylverbindungen.

Im erfindungsgemäßen Verfahren wird die Verzweigerverbindung während der Umsetzung derart hinzugefügt, dass der Anteil der Verzweigerverbindung im erhaltenen Reaktionsgemisch zu jedem Zeitpunkt während des Hinzufügens $\leq$ 7,5 Gewichts-%, bezogen auf die Menge an zu diesem Zeitpunkt zugegebener H-funktioneller Starterverbindung, Alkylenoxid und Verzweigerverbindung, beträgt. Vorzugsweise beträgt dieser Anteil $\geq$ 0,1 Gewichts-% bis $\leq$ 7,5 Gewichts-%, mehr bevorzugt $\geq$ 0,5 Gewichts-% bis $\leq$ 7 Gewichts-% und besonders bevorzugt $\geq$ 1 Gewichts-% bis $\leq$ 5 Gewichts-%. Bei einem kontinuierlich betriebenen Verfahren wird die Verzweigerverbindung derart hinzugefügt, dass der Anteil der Verzweigerverbindung im erhaltenen Reaktionsgemisch zu jedem Zeitpunkt $\leq$ 7,5 Gewichts-%, bezogen auf die Menge an zu diesem Zeitpunkt im Reaktor vorhandener H-funktioneller Starterverbindung, Polyethercarbonatpolyol, Alkylenoxid und Verzweigerverbindung, beträgt. Vorzugsweise beträgt dieser Anteil $\geq$ 0,1 Gewichts-% bis $\leq$ 7,5 Gewichts-%, mehr bevorzugt $\geq$ 0,5 Gewichts-% bis $\leq$ 7 Gewichts-% und besonders bevorzugt $\geq$ 1 Gewichts-% bis $\leq$ 5 Gewichts-%. Ohne auf eine Theorie festgelegt zu sein wird angenommen, dass bei höheren Anteilen eine Inhibierung oder Desaktivierung des Katalysators eintritt.

Die durchschnittliche Anzahl der Verzweigungsstellen je Polyethercarbonatpolyol-Molekül ergibt sich aus der Funktionalität und dem molaren Verhältnis der eingesetzten Verzweigerverbindung zu Starterverbindung. Die Menge an Verzweigerverbindung wird so gewählt, das die rechnerisch ermittelte durchschnittliche Funktionalität F des erhaltenen verzweigten Polyethercarbonatpolyols 2 < F < 22, vorzugsweise 2 < F < 11 und besonders bevorzugt 2 < F < 4 beträgt. Bei Verwendung einer monofunktionellen Starterverbindung und einer Verzweigerverbindung enthaltend genau eine polymerisierbare Gruppe sowie genau eine Zerewitinoff-aktive Starter-Funktion entspricht dies einem durchschnittlichem Einbau von 1-21 Mol der Verzweigerverbindung pro Mol Makromolekülen, vorzugsweise von 1-10 Mol der Verzweigerverbindung pro Mol Makromoleküle und besonders bevorzugt von 1-3 Mol der Verzweigerverbindung pro Mol Makromoleküle. Bei Verwendung einer bifunktionellen Starterverbindung und einer Verzweigerverbindung enthaltend genau eine polymerisierbare Gruppe sowie genau eine Zerewitinoff-aktive Starter-Funktion entspricht dies einem durchschnittlichem Einbau von 0-20 Mol der Verzweigerverbindung pro Mol Makromolekülen, vorzugsweise von 0-9 Mol der Verzweigerverbindung pro Mol Makromoleküle und besonders bevorzugt von 0-2 Mol der Verzweigerverbindung pro Mol Makromoleküle. Diese Menge an Verzweigerverbindung hat sich für den Erhalt einer relativ hohen Funktionalität der Polyethercarbonatpolyol-Moleküle bei einer mittleren bis geringen Viskosität der Polyethercarbonatpolyole als besonders geeignet erwiesen. Die geringe Viskosität der nach dem erfindungsgemäßen Verfahren erhältlichen höherfunktionellen Polyethercarbonatpolyole sichert zudem eine gute Weiterverarbeitbarkeit der Polymere mit beispielsweise schnellen Umsetzungen im Rahmen weiterer Vernetzungsreaktionen. Diese angegebenen Bereiche der durchschnittlichen Funktionalität können demzufolge zu bevorzugten mechanischen Eigenschaften der daraus erhältlichen Formkörper oder Schichten beitragen. Das Verhältnis von Verzweigerverbindung zu Starterverbindung im verzweigten Polyethercarbonatpolyol kann beispielsweise über NMR-Spektroskopie und Analyse der Intensitäten der charakteristischen Signale für eingebaute Verzweigerverbindung und verlängerte Starterverbindung bestimmt werden.

Ausführungsformen und weitere Aspekte der vorliegenden Erfindung werden nachfolgend erläutert. Sie können beliebig miteinander kombiniert werden, sofern sich aus dem Kontext nicht eindeutig das Gegenteil ergibt.

So kann mindestens eine der Verzweigerverbindungen folgender Formel entsprechen:

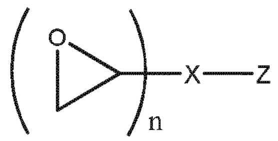

wobei

Z einer OH, NHR, COOH oder C(O)CHRC(O)R Gruppe mit
R gleich Wasserstoff, C1-C22 Alkyl, Cycloalkyl, Aralkyl, Aryl entspricht,
X eine chemische Bindung oder ein di- oder höhervalenter, Heteroatom-enthaltender oder nicht Heteroatom-enthaltender C1-C22 aliphatischer, cycloaliphatischer, araliphatischer oder aromatischer Rest und
n eine ganze Zahl ≥ 1 ist.

In einer bevorzugten Ausgestaltung kann mindestens eine der Verzweigerverbindungen folgender Formel entsprechen:

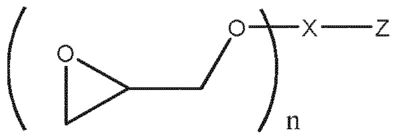

wobei X, Z und n die oben genannte Bedeutung haben.

In einer weiteren Ausgestaltung kann mindestens eine der Verzweigerverbindungen folgender Formel entsprechen:

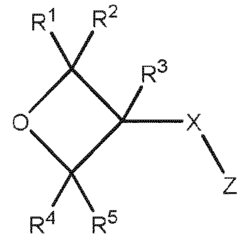

wobei

Z einer OH, NHR, COOH oder C(O)CHRC(O)R Gruppe mit
R gleich Wasserstoff, C1-C22 Allyl, Cycloalkyl, Aralkyl, Aryl entspricht,
X eine chemische Bindung oder ein di- oder höhervalenter, Heteroatom-enthaltender oder nicht Heteroatom-enthaltender C1-C22 aliphatischer, cycloaliphatischer, araliphatischer oder aromatischer Rest und
$R^1$, $R^2$, $R^3$, $R^4$, $R^5$ unabhängig voneinander gleich Wasserstoff, C1-C22 Alkyl, Cycloalkyl, Aralkyl, Aryl ist und die Reste $R^1$, $R^2$, $R^3$, $R^4$, $R^5$ gegebenenfalls Heteroatome enthalten.

Vorzugsweise steht $R^1$, $R^2$, $R^3$, $R^4$ für Wasserstoff und $R^3$ für Methyl oder Ethyl.
In einer Ausführungsform des erfindungsgemäßen Verfahrens umfasst dieses die Schritte:

($\alpha$) Vorlegen des Katalysators und:

- eines Suspensionsmittels, das keine H-funktionellen Gruppen enthält und/oder
- der H-funktionellen Starterverbindung

($\gamma$) Zudosieren von Kohlendioxid, des Alkylenoxids und der Verzweigerverbindung,

wobei weiterhin für den Fall, dass in Schritt ($\alpha$) keine H-funktionelle Starterverbindung vorgelegt wurde, Schritt ($\gamma$) das Zudosieren der H-funktionellen Starterverbindung umfasst.
Vorzugsweise umfasst diese Ausführungsform weiterhin den Schritt ($\beta$) zwischen Schritt ($\alpha$) und Schritt ($\gamma$):

($\beta$) Zudosieren eines Alkylenoxids, welches gleich oder verschieden zu dem Alkylenoxid ist, welches in Schritt ($\gamma$) eingesetzt wird.

Wenn in den nachfolgenden Ausführungen von einem DMC-Katalysator die Rede ist, werden lediglich bevorzugte Ausführungsformen geschildert. Die Ausführungen gelten selbstverständlich für alle erfindungsgemäß einsetzbaren Katalysatoren.

Zu Schritt ($\alpha$):

Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt. Der DMC-Katalysator kann in fester Form oder als Suspension in einem Suspensionsmittel, das keine H-funktionellen Gruppen enthält und/oder einer H-funktionellen Starterverbindung zugegeben werden. Die Zugabe des Suspensionsmittels und/oder der H-funktionellen Starterverbindung kann vor, gleichzeitig mit oder nach der Zugabe des DMC-Katalysators erfolgen. Während des Schrittes ($\alpha$) kann durch den Reaktor bei einer Temperatur von 50 bis 200°C, bevorzugt von 80 bis 160°C, besonders bevorzugt von 125 bis 135C ein Inertgas (beispielsweise Stickstoff oder ein Edelgas wie Argon), ein Inertgas-Kohlendioxid-Gemisch oder Kohlendioxid geleitet und gleichzeitig durch Entfernen des Inertgases oder Kohlendioxid (beispielsweise mit einer Pumpe) ein reduzierter Druck (absolut) von 10 mbar bis 800 mbar, bevorzugt von 40 mbar bis 200 mbar im Reaktor eingestellt werden.
Die Suspensionsmittel, die in Schritt ($\alpha$) zum Suspendieren des DMC-Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar-

und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausfuhrungsform werden als Suspensionsmittel, die in Schritt ($\alpha$) zum Suspendieren des DMC-Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart einer Starterverbindung in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie ß-Propiolacton, β-Butyrolacton, ß-Isovalerolacton, ß-caprolacton, ß-Isocaprolacton, ß-Methyl-ß-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofwan-1(3H)-on und 6-Methy-2-benzofiuan-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7*E*)-Oxacycloheptadec-7-en-2-on.

Lactide sind cyclische Verbindungen enthaltend zwei oder mehr Esterbindungen im Ring. Bevorzugte Verbindungen sind Glykolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Herstellung verzweigter Polyethercarbonatpolyole nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring eingesetzt. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-enl-yl]dihydrofuran-2,5-dion. Besonders bevorzugt sind Succinsäureanlrydrid, Maleinsäureanhydrid und Phthalsäureanhydrid.

Zu Schritt (β):

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 5 bis 16,0 Gew.-% (bezogen auf die im Schritt (α) eingesetzte Menge an Suspensionsmittel und/oder H-funktioneller Starterverbindung). Das Alkylenoxid kann kontinuierlich über einen längeren Zeitraum in den Reaktor dosiert, in einem Schritt oder schrittweise in mehreren Teilmengen zugegeben werden.

Zu Schritt (γ):

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit des Kohlendioxids ein Überschuss von Vorteil ist. Die Kohlendioxid-Menge kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der höherfunktionellen Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Die in dem Schritt (γ) eingesetzten Alkylenoxide können gleich oder verschieden von den im Schritt (β) eingesetzten Alkylenoxiden sein. Das Alkylenoxid kann über einen längeren Zeitraum in den Reaktor dosiert werden, in einem Schritt oder schrittweise in mehreren Teilmengen zugegeben werden.

Die Verzweigerverbindung kann in einem Lösungsmittel oder in Alkylenoxid gelöst zugegeben werden, wobei deren Konzentration 1 bis 50 Gew.-%, vorzugsweise 2 bis 18 Gew.-%, besonders bevorzugt 5 bis 15 Gew.-% beträgt. Als Lösungsmittel sind die oben genannten polar-aprotischen, schwach polar-aprotischen und unpolar-aprotischen Lösungsmittel geeignet, in denen die Verzweigerverbindung löslich ist. In einer alternativen Ausführungsform kann die Verzweigerverbindung in Reinsubstanz zugegeben werden, während parallel die Alkylenoxide separat dosiert werden.

In einer weiteren Ausgestaltung des Verfahrens kann die Temperatur im Schritt (γ) ≥ 90°C und ≤ 130°C betragen. Dieser Temperaturbereich für die Durchfiihrung der Polymerisierungsreaktion hat sich aufgrund der Prozessökonomie und der Eigenschaften der so erhältlichen, höherfunktionellen Polyethercarbonatpolyole als besonders vorteilhaft erwiesen. Die innerhalb dieses Temperaturbereiches erzielbaren Ausbeuten an verzweigten Polyethercarbonatpolyolen sind hoch und es wird ein nahezu vollständiger Umsatz an Monomeren erreicht. Die erhältlichen verzweigten Polyethercarbonatpolyole zeichnen sich dabei durch eine enge Molekularmassenverteilung und steuerbare Funktionalität aus. In einer weiteren Ausführungsform der Erfindung kann die Temperatur im Schritt (γ) zudem ≥ 95°C und ≤ 115°C betragen.

Das erfindungsgemäße Verfahren kann kontinuierlich, im semi-batch Verfahren oder diskontinuierlich durchgeführt werden.

Die drei Schritte α, β und γ können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte α, β und γ in unterschiedlichen Reaktoren durchgeführt, kann für jeden Schritt ein unterschiedlicher Reaktortyp verwenden werden.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschrittes (Schritt (β)) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Copolymerisation (Schritte (γ) und (δ)) beträgt vorzugsweise > 0 bis 40 Ges.-%, besonders bevorzugt > 0 bis 25 Gew-%, höchst bevorzugt > 0 bis 15 Ges.-% (jeweils bezogen auf das Gewicht der Reaktionsmischung).

Eine weitere mögliche Ausführungsform der Erfindung für die Copolymerisation (Schritt (γ)) ist dadurch gekennzeichnet, dass eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 100 mol% Äquivalente (jeweils bezogen auf die gesamte Menge an H-funktionellen Starterverbindungen).

In einer bevorzugten Ausführungsfonn wird die gemäß der Schritte (α) und (β) aktivierte Katalysator-Starter-Mischung in demselben Reaktor weiter mit Alkylenoxiden, Verzweigerverbindung und Kohlendioxid umgesetzt.

In einer weiteren bevorzugten Ausführungsform wird die gemäß der Schritte (α) und (β) aktivierte Katalysator-Starter-Mischung in einem anderen Reaktionsbehältnis (beispielsweise einem Rührkessel, Rohrreaktor oder Schlaufenreaktor) weiter mit Alkylenoxiden, Verzweigerverbindung und Kohlendioxid umgesetzt.

In einer weiteren bevorzugten Ausführungsform wird die gemäß dem Schritt (α) getrocknete Katalysator-Starter-Mischung in einem anderen Reaktionsbehältnis (beispielsweise einem Rührkessel, Rohrreaktor oder Schlaufenreaktor) gemäß den Schritten (β) und (γ) mit Alkylenoxiden, Verzweigerverbindung und Kohlendioxid umgesetzt.

Bei der Reaktionsführung in einem Rohrreaktor werden die gemäß dem Schritt (α) getrocknete Katalysator-Starter-Mischung oder die gemäß den Schritten (α) und (β) aktivierte Katalysator-Starter-Mischung und gegebenenfalls weitere Starterverbindung sowie Alkylenoxide, Verzweigerverbindung und Kohlendioxid kontinuierlich durch ein Rohr gepumpt. Bei Verwendung einer gemäß dem Schritt α getrockneten Katalysator-Starter-Mischung erfolgt die Aktivierung gemäß Schritt (β) im ersten Teil des Rohrreaktor und die Copolymerisation gemäß Schritt (β) im zweiten Teil des Rohneaktors. Die molaren Verhältnisse der Reaktionspartner varüeren je nach gewünschtem Polymer. In einer bevorzugten Ausführungsfom wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge des Alkylenoxids kann am Eingang des Reaktors eingebracht werden. Die Restmenge des Alkylenoxids wird bevorzugt über mehrere Dosierstellen, die entlang des Reaktors angeordnet sind, in den Reaktor eingebracht. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern. Bevorzugt wird durch die Mischelemente zudosiertes $CO_2$ und/oder Alkylenoxid mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren, hintereinander geschalteten Rohrreaktoren oder mehreren hintereinander geschalteten Rührkesseln.

Um einen vollständigen Eduktumsatz zu realisieren, kann dem Reaktionsapparat, in dem der Schritt (γ) durchgeführt wird, ein weiterer Kessel oder ein Rohr ("Verweilrohr") nachgeschaltet werden, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor kann bevorzugt bei 10 bis 150°C und bevorzugt bei 20 bis 100°C liegen. Das Reaktionsgemisch enthält am Ende des nachgeschalteten Reaktors vorzugsweise weniger als 0,05 Gew.-% Alkylenoxid.

Des Weiteren kann in einem zusätzlichen Aspekt des erfindungsgemäßen Verfahrens die Zugabe der Verzweigerverbindung in Schritt (γ) während beliebiger Zeiten der Alkylenoxid-Zugabe erfolgen. Vorzugsweise erfolgt die Zugabe über ≥ 20%, bevorzugt ≥ 50%, besonders bevorzugt über ≥ 80% und ganz besonders bevorzugt während der gesamten Zeit der Alkylenoxid-Zugabe. Ohne durch die Theorie gebunden zu sein wird durch die langsame Zugabe der Verzweigerverbindung eine Inhibierung des DMC-Katalysators vermieden.

In einer bevorzugten Ausführungsform des erfindungsgemäßen Verfahrens beträgt das molare Verhältnis der Zugabegeschwindigkeit des Alkylenoxid zu der Zugabegeschwindigkeit der Verzweigerverbindung zu jedem Zeitpunkt des erfindungsgemäßen Verfahrens ≥ 2,5. Besonders bevorzugt liegt dieses Verhältnis im Bereich ≥ 2,5 und ≤ 200, ganz besonders bevorzugt im Bereich ≥ 5,0 und ≤ 100. Ohne an eine Theorie gebunden zu sein, kommt es bei Unterschreiten des Verhältnisses zu einer Deaktivierung des eingesetzten Katalysators.

In einer weiteren Ausfuhrungsform des erfindungsgemäßen Verfahrens ist die Zugabe der Verzweigerverbindung abgeschlossen, bevor 50 mol% der Gesamtmenge des Alkylenoxids in dieser Umsetzung zugegeben wurden.

In einer weiteren Ausführungsfonn des erfindungsgemäßen Verfahrens wird mit der Zugabe der Verzweigerverbindung begonnen, nachdem 50 mol% der Gesamtmenge des Alkylenoxids in dieser Umsetzung zugegeben wurden.

Ohne durch eine Theorie gebunden zu sein, können als Funktion des Zugabezeitpunktes der Verzweigerverbindung unterschiedliche Molekülgeometrien des höherfunktionellen Polyethercarbonatpolyols resultieren. Eine Möglichkeit des Einflusses des Zugabezeitpunktes auf die erhältliche Molekülgeometrie wird in nachfolgenden Schema dargestellt (hier beispielhaft: Zugabe von zwei Äquivalenten der Verzweigerverbindung pro Äquivalent bi-funktioneller Starterverbindung; die Polymerkette ist als Linie dargestellt):

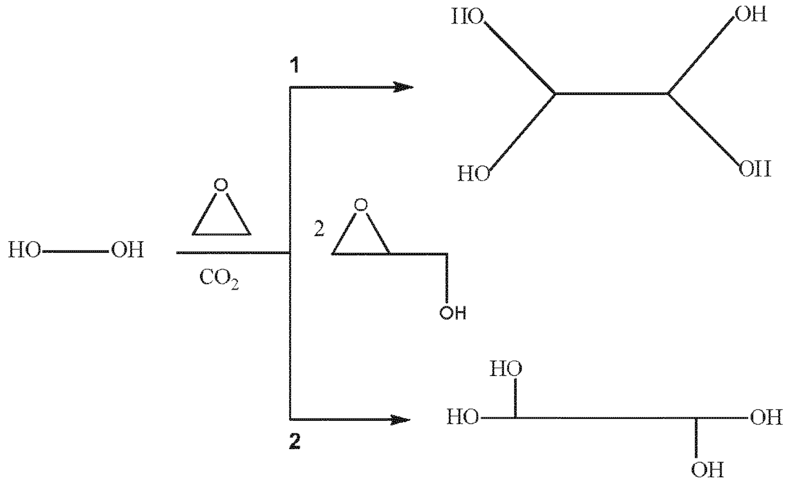


Reaktionsführung 1: Die "Frühe Zugabe":

Die Zugabe der Verzweigerverbindung ist vorzugsweise abgeschlossen, bevor mehr als die Hälfte, bevorzugt bevor mehr als ein Viertel der Alkylenoxide zugegeben wurde ("frühe Zugabe"). Diese Vorgehensweise führt zu einer eher sternförmigen Molekülgeometrie mit in etwa gleich langen Polymerketten zwischen den eingebauten Verzweigermolekülen und den terminalen OH-Gruppen sowie zu exponierten funktionellen Gruppen, zum Beispiel OH-Gruppen, in den Außenbereichen der Polymerstruktur. Als Konsequenz führt dies zu einer besonders niedrigen Viskosität der erhaltenen Polyethercarbonatpolyole und zu geringeren Gel-Punkten bei einer anschließenden Umsetzung mit Vernetzungsreagentien, wie z.B. Isocyanaten.

Reaktionsführung 2: Die "Späte Zugabe":

Die Zugabe der Verzweigerverbindung kann auch erfolgen, nachdem mehr als die Hälfte, gegebenenfalls nachdem mehr als drei Viertel der Alkylenoxide zugegeben wurde ("späte Zugabe"). Innerhalb dieser Ausführungsform erhält man eher langgestreckte Molekülgeometrien mit erhöhter Viskosität und zumindest partieller sterischer Abschirmung einzelner H-funktioneller Gruppen. Dies kann im Rahmen einer anschließenden Umsetzung mit Vernetzungsreagenzien, wie z.B. Isocyanaten, zu späteren Gel-Punkten führen.

In einer alternativen Ausführungsform kann die Zugabe der Verzweigerverbindung während beliebiger Zeiten oder während der gesamten Zeit der Alkylenoxid-Zugabe erfolgen. Bei Zugabe von mehreren Äquivalenten Verzweigerverbindung bezogen auf die Menge einer eingesetzten Starterverbindung und kontinuierlicher Zugabe der Verzweigerverbindung über einen längeren Zeitraum der Alkylenoxid-Zugabe können eiförmige Polyethercarbonatpolyol-Moleküle mit vielen Verzweigungsstellen erhalten werden.

Gemäß einer weiteren Ausführungsform wird wenigstens der Schritt (γ) kontinuierlich durchgeführt. Insbesondere ist es möglich, dass Schritt (γ) ein kontinuierliches Zudosieren der H-funktionellen Starterverbindung umfasst. Die Menge der H-funktionellen Starterverbindungen, die in Schritt (γ) kontinuierlich in den Reaktor zudosiert werden, beträgt bevorzugt mindestens 20 mol% Äquivalente, besonders bevorzugt mindestens 70 mol% Äquivalente und ganz besonders bevorzugt mindestens 95 mol% Äquivalente (jeweils bezogen auf die gesamte Menge an H-funktionellen Starterverbindungen). Weiterhin bevorzugt werden dem Reaktor kontinuierlich Alkylenoxid und Kohlendioxid zugeführt. Dem Reaktor wird kontinuierlich ein Teil des Produktgemisches entnommen, so dass die in dem Reaktor enthaltene Menge Produktgemisch innerhalb gewisser Grenzen konstant bleibt.

Es ist auch möglich, dass Schritt (γ) ein diskontinuierliches Zudosieren der H-funktionellen Starterverbindung umfasst. Das diskontinuierliche Zudosieren einer H-funktionellen Starterverbindung kann die Zugabe der H-funktionellen

Starterverbindung in einem oder mehreren Pulsen oder mit konstanter oder sich änderndern Zugabegeschwindigkeit über einen Teil der Zeit, während der in Schritte (γ) ein oder mehrere Alkylenoxide und Kohlendioxid zu der resultierenden Mischung fortwährend dosiert wird, umfassen. Die Menge der weiteren H-funktionellen Starterverbindungen, die in Schritt (γ) kontinuierlich in den Reaktor zudosiert werden, beträgt bevorzugt mindestens 20 mol% Äquivalente, besonders bevorzugt mindestens 70 mol% Äquivalente und ganz besonders bevorzugt mindestens 95 mol% Äquivalente (jeweils bezogen auf die gesamte Menge an H-funktionellen Starterverbindungen). Weiterhin werden dem Reaktor über die zur Herstellung des gewünschten Molekulargewichts benötigte Reaktionszeit kontinuierlich Alkylenoxid und Kohlendioxid zugeführt.

Es kann in einer Ausführungsform des erfindungsgemäßen Verfahrens zur Herstellung höherfunktioneller Polyethercarbonatpolyolen aus ein oder mehreren Alkylenoxiden, ein oder mehreren Verzweigerverbindungen, ein oder mehreren H-funktionellen Starterverbindungen und Kohlendioxid in Gegenwart eines Doppelmetallcyanid-Katalysators, folgende Verfahrensführung gewählt werden:

Es wird

(α1) unter Inertgasatmosphäre (beispielsweise Argon oder Stickstoff), unter einer Atmosphäre aus einem Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator vorgelegt und anschließend die H-funktionelle Starterverbindung zugesetzt,

(β1) zu dem Gemisch aus Schritt (α1) unter Inertgas oder einem Inertgas-Kohlendioxid-Gemisch (beispielsweise Argon-Kohlendioxid-Gemisch oder Stickstoff-Kohlendioxid-Gemisch) oder unter einer reinen Kohlendioxid-Atmosphäre, Alkylenoxid bei Temperaturen von 90 bis 150°C, vorzugsweise von 125 bis 135°C zugegeben, und anschließend

(γ1) Verzweigerverbindung, die gegebenenfalls in einem Lösungsmittel oder einem oder mehreren Alkylenoxiden gelöst sind, und Kohlendioxid zu der aus Schritt (β1) resultierenden Mischung fortwährend dosiert ("Zugabe Verzweigerverbindung"),

(δ1) ein oder mehrere Alkylenoxide und Kohlendioxid zu der aus Schritt (γ1) resultierenden Mischung fortwährend dosiert ("Copolymerisation").

Die Schritte (γ1) und (δ1) können in dieser Reihenfolge ("frühe Zugabe") und in umgekehrter Reihenfolge ("späte Zugabe") durchgeführt werden. Bevorzugt ist die Zugabe der Verzweigerverbindung nach der Aktivierungsphase und zu Beginn der eigentlichen Polymerisation ("frühe Zugabe"). Die Schritte (γ1) und (δ1) können auch mehrfach in beliebiger Reihenfolge durchgeführt werden.

Die Breite der Molmassenverteilung (Polydispersität) der erfindungsgemäß erhältlichen höherfunktionellen Polyethercarbonatpolyole kann bei früher Zugabe der Verzweigerverbindung geringer als bei einer späteren Zugabe sein. So kann die Polydispersität bei früher Zugabe unterhalb von 4,0 und bei später Zugabe unterhalb von 6,0 liegen. Bevorzugt sind höherfunktionelle Polyethercarbonatpolyole mit einer Polydispersität unterhalb von 2,5.

Die Viskosität der erfindungsgemäßen höherfunktionellen Polyethercarbonatpolyole kann bei früher Zugabe der Verzweigerverbindung geringer sein als bei einer späteren Zugabe.

Innerhalb einer weiteren Ausführungsform des erfindungsgemäßen Verfahrens können die Schritte (γ1) und (δ1) in umgekehrter Reihenfolge erfolgen. Diese Verfahrensführung kann insbesondere vorteilhaft sein, falls höherviskose, höherfunktionelle Polyethercarbonatpolyole mit einer breiten Molmassenverteilung, d.h. hohen Polydispersität gewünscht sind. Des Weiteren kann dieses Verfahren vorteilhafterweise angewandt werden, falls im Rahmen weiterer Umsetzungen längere Aushärtezeiten gewünscht sind. Diese längeren Aushärtezeiten können sich beispielsweise bedingt durch die Molekülgeometrie durch eine verstärkte Abschirmung der funktionellen Gruppen an den Enden der Polymere ergeben.

In einer speziellen Ausführungsform des erfindungsgemäßen Verfahrens zur Herstellung höherfunktioneller Polyethercarbonatpolyolen aus ein oder mehreren Alkylenoxiden, ein oder mehreren Verzweigerverbindungen, ein oder mehrerer H-funktioneller Starterverbindungen und Kohlendioxid in Gegenwart eines Doppelmetallcyanid-Katalysators, kann folgende Verfahrensführung gewählt werden: Es wird

(α2) unter Inertgasatmosphäre (beispielsweise Argon oder Stickstoff), unter einer Atmosphäre aus einem Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator vorgelegt und anschließend das Suspensionsmittel, das keine H-funktionellen Gruppen enthält, oder die H-funktionelle Starterverbindung zugesetzt,

(β2) zu dem Gemisch aus Schritt (α2) unter Inertgas oder einem Inertgas-Kohlendioxid-Gemisch (beispielsweise Argon-Kohlendioxid-Gemisch oder Stickstoff-Kohlendioxid-Gemisch) oder unter einer reinen Kohlendioxid-Atmosphäre, Alkylenoxid bei Temperaturen von 90 bis 150°C, vorzugsweise von 125 bis 135°C zugegeben, und anschließend

(δ21) die H-funktionelle Starterverbindung, eine Teilmenge der einen oder mehreren Alkylenoxide und Kohlendioxid zu der aus Schritt (β2) resultierenden Mischung fortwährend dosiert ("Copolymerisation"),
(γ2) Verzweigerverbindung, die gegebenenfalls in einem Lösungsmittel oder in einem oder mehreren Alkylenoxiden gelöst sind, und Kohlendioxid zu der aus Schritt (δ21) resultierenden Mischung fortwährend dosiert ("Zugabe Verzweigerverbindung"),
(δ22) ein oder mehrere Alkylenoxide und Kohlendioxid zu der aus Schritt (γ) resultierenden Mischung fortwährend dosiert ("Copolymerisation").

Das Verhältnis der Alkylenoxid-Menge in den Schritten (δ21) und (δ22) bestimmt bei dieser Ausführungsform die Architektur der erhaltenen höherfunktionellen Polyethercarbonatpolyole. Die Menge Alkylenoxid in Schritt (δ21) kann im Verhältnis zu der Menge Alkylenoxid in Schritt (δ22) klein sein ("frühe Zugabe"). Die Menge Alkylenoxid in Schritt (δ21) kann jedoch auch im Verhältnis zu der Menge Alkylenoxid in Schritt (δ22) groß sein ("späte Zugabe"). Bevorzugt ist die Menge Alkylenoxid in Schritt (δ21) klein im Verhältnis zu der Menge Alkylenoxid in Schritt (δ22) ("frühe Zugabe"). Beispielsweise kann das Verhältnis der Menge Alkylenoxid in Schritt (δ21) zu der Menge Alkylenoxid in Schritt (δ22) kleiner als 0,5, bevorzugt kleiner als 0,2 betragen. Die Schritte (δ21), (γ2) und (δ22) können auch mehrfach in beliebiger Reihenfolge durchgeführt werden. In einer speziellen Ausführungsform erfolgen die Schritte (δ21) und (γ2) parallel (gleichzeitig) zu einander.
In einer weiteren speziellen Ausführungsform des erfindungsgemäßen Verfahrens zur Herstellung höherfunktioneller Polyethercarbonatpolyole aus ein oder mehreren Alkylenoxiden, ein oder mehreren Verzweigerverbindungen, ein oder mehreren H-funktionellen Starterverbindungen und Kohlendioxid in Gegenwart eines Doppelmetallcyanid-Katalysators, kann folgende Verfahrensführung gewählt werden: Es wird

(α3) unter Inertgasatmosphäre (beispielsweise Argon oder Stickstoff), unter einer Atmosphäre aus einem Inertgas-Kohlendioxid-Gemisch oder unter einer reinen Kohlendioxid-Atmosphäre bei Temperaturen von 90 bis 150°C, vorzugsweise von 125 bis 135°C, der DMC-Katalysator vorgelegt und anschließend das Suspensionsmittel, das keine H-funktionellen Gruppen enthält, zugesetzt,
(β3) zu dem Gemisch aus Schritt (α3) unter Inertgas oder einem Inertgas-Kohlendioxid-Gemisch (beispielsweise Argon-Kohlendioxid-Gemisch oder Stickstoff-Kohlendioxid-Gemisch) oder unter einer reinen Kohlendioxid-Atmosphäre, Alkylenoxid bei Temperaturen von 90 bis 150°C, vorzugsweise von 125 bis 135°C zugegeben, und anschließend
(γ3) Verzweigerverbindung, die gegebenenfalls in einem Lösungsmittel oder in einem oder mehreren Alkylenoxiden gelöst ist, zu der aus Schritt (β3) resultierenden Mischung fortwährend dosiert ("Zugabe Verzweigerverbindung").
(δ3) die H-funktionelle Starterverbindung, ein oder mehrere Alkylenoxide und Kohlendioxid zu der aus Schritt (β3) resultierenden Mischung fortwährend dosiert ("Copolymerisation").

Die Zugabe der Verbindungen in den Schritten (γ3) und (δ3) kann in einer beliebigen Reihenfolge begonnen werden. Bevorzugt wird die Zugabe der H-funktionellen Starterverbindung, ein oder mehrerer Alkylenoxide und Kohlendioxid in Schritt (δ3) begonnen, bevor die Zugabe der Verzweigerverbindung in Schritt (γ3) begonnen wird. Die fortwährende Dosierung der Verzweigerverbindung in Schritt (γ3) und der H-funktionellen Starterverbindung, ein oder mehrerer Alkylenoxide und Kohlendioxid in Schritt (δ3) erfolgen bei einer kontinuierlichen Verfahrensführung bevorzugt parallel (gleichzeitig) zu einander. Die Schritte (γ3) und (δ3) können jedoch auch alternierend oder jeweils für sich unter wiederholter pulsweiser Zugabe der Komponenten durchgeführt werden. Parallel zu der fortwährenden Zugabe der Verbindungen in den Schritten (γ3) und (δ3) wird bei einer kontinuierlichen Verfahrensführung eine Teilmenge des Produktgemisches dem Reaktor kontinuierlich entnommen. Optional ist dem Reaktor ein weiterer Reaktor nachgeschaltet, in dem das erhaltene höherfunktionelle Polyethercarbonatpolyol mit weiterem Alkylenoxid, das jeweils eine Epoxidgruppe je Molekül enthält, und Kohlendioxid umgesetzt wird ("frühe Zugabe" der Verzweigerverbindung). Alternativ kann auch der Schritt (δ3) in einem ersten Reaktor durchgeführt werden und Schritt (γ3) in einem zweiten Reaktor ("späte Zugabe").
In einer bevorzugten Ausführungsform des erfindungsgemäßen Verfahrens werden als Alkylenoxid Ethylenoxid und/oder Propylenoxid eingesetzt werden.
Gemäß einer weiteren bevorzugten Ausführungsform werden als Starterverbindung Polyetherpolyole und/oder oligomerisierte Fettsäuren (vorzugsweise hydriert) eingesetzt.
In einer weiteren Ausführungsform des erfindungsgemäßen Verfahrens ist der Katalysator ein DMC-Katalysator. Die in dem erfindungsgemäßen Verfahren bevorzugt einsetzbaren DMC-Katalysatoren enthaltenen Doppelmetallcyanid-Verbindungen sind die Reaktionsprodukte wasserlöslicher Metallsalze und wasserlöslicher Metallcyanidsalze.
Doppelmetallcyanid (DMC)-Katalysatoren sind aus dem Stand der Technik zur Homopolymerisation von Alkylenoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP A 761 708, WO 97/40086 A1, WO 98/16310 A1 und WO 00/47649 A1 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man:

(a) im ersten Schritt eine wässrige Lösung eines Metallsalzes mit der wässrigen Lösung eines Metallcyanidsalzes in Gegenwart eines oder mehrerer organischer Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der folgenden allgemeinen Formel auf:

M(X)n

wobei M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und $Cu^{2+}$.

Bevorzugt ist M $Zn^{2+}$, $Fe^{2+}$, $Co^{2+}$ oder $Ni^{2+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; n ist 1, wenn X = Sulfat, Carbonat oder Oxalat ist und n ist 2, wenn X = Halogenid, Hydroxid, Carboxylat, Cyanat, Thiocyanat, Isocyanat, Isothiocyanat oder Nitrat ist.

Ebenfalls geeignete Metallsalze weisen eine Zusammensetzung nach der folgenden allgemeinen Formel auf:

$M_r(X)_3$

wobei M ausgewählt ist aus den Metallkationen $Fe^{3+}$, $Al^{3+}$, $Co^{3+}$ und $Cr^{3+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; r ist 2, wenn X = Sulfat, Carbonat oder Oxalat ist und r ist 1, wenn X = Halogenid, Hydroxid, Carboxylat, Cyanat, Thiocyanat, Isocyanat, Isothiocyanat oder Nitrat ist.

Ebenfalls geeignete Metallsalze weisen eine Zusammensetzung nach der folgenden allgemeinen Formel auf:

$M(X)_s$

wobei M ausgewählt ist aus den Metallkationen $Mo^{4+}$, $V^{4+}$ und $W^{4+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; s ist 2, wenn X = Sulfat, Carbonat oder Oxalat ist und s ist 4, wenn X = Halogenid, Hydroxid, Carboxylat, Cyanat, Thiocyanat, Isocyanat, Isothiocyanat oder Nitrat ist.

Ebenfalls geeignete Metallsalze weisen eine Zusammensetzung nach der folgenden allgemeinen Formel auf:

M(X)t

wobei M ausgewählt ist aus den Metallkationen $Mo^{6+}$ und $W^{6+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; t ist 3, wenn X = Sulfat, Carbonat oder Oxalat ist und t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der folgenden allgemeinen Formel auf:

$$(Y)_aM'(CN)_b(A)_c$$

wobei M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanofenat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit einer Zusammensetzung nach der folgenden allgemeinen Formel:

$$M_x[M'_{x'}(CN)_y]_z$$

worin M und M' wie vorstehend definiert sind und x, x', y und z ganzzahlig und so gewählt sind, dass die Elektronenneutralität der Doppelmetallcyanidverbindung gegeben ist.

Vorzugsweise ist x = 3, x' = 1, y = 6 und z = 2, M = Zn(II), Fe(II), Co(II) oder Ni(II) und M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly (acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische Oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung eine weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Ges.-%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von 20 - 100°C und bei Drücken von 0,1 mbar bis Normaldruck (1013 mbar) getrocknet.

Ein besonders bevorzugtes Verfahren zur Isolierung der erfindungsgemäßen DMC-Katalysatoren aus der Suspension durch Filtration, Filterkuchenwäsche und Trocknung wird zum Beispiel in der WO-A 01/80994 beschrieben.

In einer weiteren Ausführungsform des erfindungsgemäßen Verfahrens ist die Verzweigerverbindung ausgewählt ist aus der Gruppe der Glycidalkohole, der Oxetanalkohole, der Monoglycidylether von Diolen, der Mono- oder Diglycidylether von Triolen, der unsubstituierten oder substituierten 3-Hydroxyalkyloxetane und/oder der Verbindungen gemäß der nachfolgenden Formel:

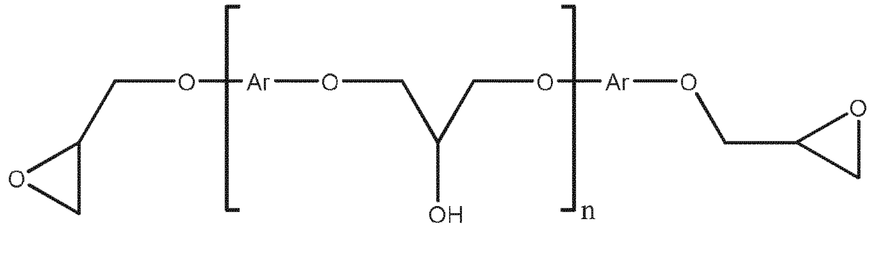

wobei Ar ein divalenter aromatischer, araliphatischer, cycloalphatischer oder aliphatischer Rest mit 5 bis 22 Kohlenstoffatomen sein kann, der auch Heteroatome wie Sauerstoff oder Schwefel enthalten kann und n eine natürliche Zahl von 1 bis 10 ist.

Durch die zusätzlichen OH-Gruppen führen die genannten Verbindungen zu einer zusätzlichen Erhöhung der durchschnittlichen Funktionalität der Polyole in der Reaktionsmischung.

Hinsichtlich der Glycidalkohole ist Glycidol (2,3-Epoxy-1-propanol) bevorzugt.

Hinsichtlich der Oxetanalkohole sind 3-Methyl-3-oxetanemethanol und Ethylhydroxymethyloxetan bevorzugt.

Beispiele für geeignete Monoglycidylether sind Monoglycidylether von Ethylenglykol, 1,2-Propylenglykol, 1,3-Propylenglykol, Neopentylgylkol, 1,4-Butandiol, Adipol, Diethylenglykol, Triethylenglykol, Dipropylenglykol, Tripropylenglykol, Oligoethylen- oder Propylenglykolen mit einer Molmasse von 300 bis 1000 g/mol, Octandiol, Decandiol, Dodecandiol, Dimerfettdiol, 2-Methyl-1,3-propandiol, Cyclohexandimethanol, TCD-Diol, Pinandiol, Hydrochinon, Resorcin, Bisphenol-F, Bisphenol-A oder kernhydriertem Bisphenol-A.

Als Mono- oder Diglycidylether von Triolen sind Mono- oder Diglycidylether von Glycerin bevorzugt. Diese können auch als technische Mischung eingesetzt werden, wie es beispielsweise durch die folgende Formel dargestellt ist:

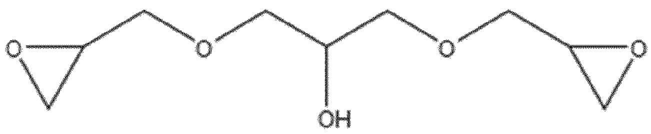

+

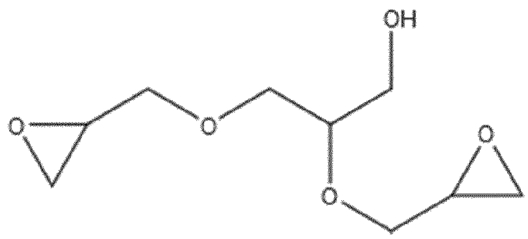

Technische Glycidylether können auch an-oligomerisierte Produkte, deren Monomereinheiten über das Fragment $-O-CH_2-CH(OH)-CH_2-O-$ verknüpft sind, enthalten. Auch diese Produkte sind erfindungsgemäß mit eingeschlossen.

In einer weiteren Ausführungsform des erfindungsgemäßen Verfahrens wird in einem zusätzlichen, nachfolgenden Verfahrensschritt das erhaltene Polyethercarbonatpolyol mit Di- und/oder Polyisocyanaten zur Reaktion gebracht. Beispiele für geeignete Isocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandüsocyanat (Nonantrüsocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von $\geq 2$ und Polyolen mit einem Molekulargewicht von $\geq 62$ g/mol bis $\leq 8000$ g/mol und OH-Funktionalitäten von $\geq 1,5$ bis $\leq 6$.

Ein weiterer Gegenstand der vorliegenden Erfindung ist ein Polyethercarbonatpolyol, erhältlich nach einem erfindungsgemäßen Verfahren. Vorteilhafterweise kann das Molekulargewicht der erhaltenen Polyethercarbonatpolyole mindestens 400 g/mol, bevorzugt 400 bis 1'000'000 g/mol, besonders bevorzugt 500 bis 60'000 g/mol und ganz besonders bevorzugt 2'000 bis 3'000 g/mol betragen. Diese Molekulargewichtsbereiche können zusammen mit der steuerbaren Molekülgeometrie zu geeigneten Viskositäten der höherfunktionellen Polyethercarbonatpolyole führen.

Insbesondere durch die im Vergleich zu linearen Polyethercarbonatpolyole geringere Viskosität der erfindungsgemäßen verzweigten Polyethercarbonatpolyole (bei gleicher OH-Zahl, Molmasse und Glastemperatur) wird die technische Handhabbarkeit verbessert. Ferner zeichnen sich die erfindungsgemäßen verzweigten Polyethercarbonate durch eine hohe Reaktivität gegenüber Vernetzungsreagentien, wie Isocyanaten, aus, die sich durch geringere Zeiten zur

Erreichung des Gel-Punktes ausdrückt.

Die erfindungsgemäß herstellbaren Polyethercarbonatpolyole können in Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung, kosmetischen Formulierungen oder als Porenbildner bei der Herstellung von Keramiken Verwendung finden. Durch die Flexibilität des erfindungsgemäßen Verfahrens lassen sich gezielt höherfunktionelle Polyethercarbonatpolyole mit steuerbaren Funktionalitäten, Molekulargewichtsverteilungen und Viskositäten erhalten, welche sich vorteilhafterweise in oben genannten Anwendungsbereichen einsetzen lassen. Dem Fachmann ist bekannt, dass abhängig vom jeweiligen Anwendungsgebiet die zu verwendenden Polyethercarbonatpolyole gewisse Stoffeigenschaften, wie beispielsweise Molekulargewicht, Viskosität, Funktionalität und/oder Hydroxylzahl erfüllen müssen.

Bei Reaktion mit difunktionellen oder höherfunktionellen Vernetzungsreagentien, wie z.B. Isocyanaten bilden die erfindungsgemäßen Polyethercarbonate Netzwerke aus, die je nachdem ob die Gebrauchstemperatur über oder unter der Glastemperatur liegt, Elastomer- oder Duromercharakter haben. Dieses ist ein bevorzugtes Anwendungsgebiet der erfindungsgemäßen verzweigten Polyethercarbonate. Die Elastomere können den Charakter von Formkörpern oder von flächigen Gebilden (Beschichtungen, Filmen) haben.

Daher ist ein weiterer Aspekt der Erfindung ein vernetztes Polyethercarbonat-Polymer, erhältlich nach dem zuvor beschriebenen Verfahren der Reaktion der Polyethercarbonatpolyole mit Di- und/oder Polyisocyanaten.

Die nach diesem Verfahren erhältlichen Isocyanat-vernetzten Polyethercarbonat-Polymere können sich durch eine einfache Prozessführung bei ihrer Herstellung und verbesserte mechanische Eigenschaften auszeichnen. Dies ist wahrscheinlich durch die im Vergleich zu nicht verzweigten Polyethercarbonat-Polymeren höhere Funktionalität pro vernetzbarem Polyethercarbonatpolyol-Molekül bedingt. Die steuerbare Viskosität der höherfunktionellen Polyethercarbonatpolyole kann zudem genutzt werden, möglichst gering viskose höherfunktionelle Polyethercarbonatpolyole bereitzustellen, welche zu besonders schnell härtenden und homogenen Produkten führen können.

Des Weiteren können die vernetzten Polyethercarbonat-Polymere in duromeren Festkörpern, viskoelastischen Schäumen oder Beschichtungen Verwendung finden. Die nach dem erfindungsgemäßen Verfahren erhältlichen höherfunktionellen Polyethercarbonatpolyole können problemlos verarbeitet werden, insbesondere durch Umsetzung mit Di- und/oder Polyisocyanaten zu Polyurethanen, insbesondere zu Polyurethan-Weichschaumstoffen, Polyurethan-Hartschaumstoffen, Polyurethan-Elastomeren oder Polyurethan-Beschichtungen. Für Polyurethan-Anwendungen können vorzugsweise höherfunktionelle Polyethercarbonatpolyole eingesetzt werden, die eine Funktionalität von mindestens 2, bevorzugt mindestens 2,5 und besonders bevorzugt mindestens 2,8 besitzen. Als Funktion der Glastemperatur und der Gebrauchstemperatur der vernetzten Polyethercarbonat-Polymere können derart Formkörper oder Schichten mit Elastomer- oder Duromer-Charakter hergestellt werden.

Im Sinne der Erfindung sind zudem Formkörper aufweisend eine Schicht umfassend ein vernetztes Polyethercarbonat-Polymer. Die erfindungsgemäß herstellbaren Schichten können auf Formkörpern zu einem mechanischen und chemischen Schutz beitragen und so zu einer erhöhten Lebensdauer von Werkstücken beitragen. Bedingt durch die hohe Funktionalität und steuerbare Viskosität können diese Schichten auf Formkörpern schnell und gleichmäßig hergestellt werden.

Hinsichtlich weiterer Vorteile und Merkmale der vorbeschriebenen Verwendung wird hiermit explizit auf die Erläuterungen im Zusammenhang mit den erfindungsgemäßen Polymeren sowie dem erfindungsgemäßen Verfahren verwiesen. Auch sollen erfindungsgemäße Merkmale und Vorteile des Verfahrens auch für die erfindungsgemäßen Polymere und die erfindungsgemäße Verwendung anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

## Beispiele

Die vorliegende Erfindung wird anhand der nachfolgenden Beispiele weiter erläutert, ohne jedoch darauf beschränkt zu sein.

Eingesetzte H-funktionelle Starterverbindungen (Starter):

PET-1: Bifunktionelles Polypropylenglykol mit einer OH-Zahl von 257 $mg_{KOH}/g$

PET-2: Trifunktionelles Polypropylenglykol mit einer OH-Zahl von 400 $mg_{KOH}/g$

Dimerfettsäure: bifunktionelle hydrierte Dimerfettsäure mit einer Säure-Zahl von 197 mg/g, CAS 68783-41-5

Eingesetzte Alkylenoxide:

Propylenoxid mit einer Dichte von 0,83 g/ml

Eingesetzte Verzweigerverbindungen:

Glycidol mit einer Dichte von 1,11g/ml
Glycerindiglycidylether mit einer Dichte von 1,23 g/ml
3-Ethyl-3-oxetanemethanol mit einer Dichte von 1,019 g/ml
Der DMC-Katalysator wurde hergestellt nach Beispiel 6 von WO-A 01/80994.

Bei der Copolymerisation resultierte neben dem cyclischen Propylencarbonat das Polyethercarbonatpolyol, welches einerseits die folgenden Polycarbonat-Einheiten enthält:

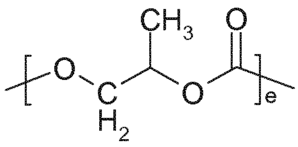 bzw. 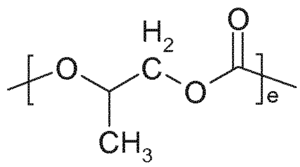

und andererseits die nachfolgend gezeigten Polyether-Einheiten enthält:

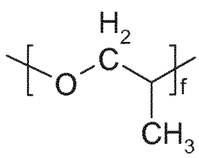 bzw. 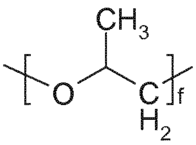

Die Charakterisierung des Reaktionsgemisches erfolgte durch $^1$H-NMR Spektroskopie (Bestimmung des Gehalts an nicht umgesetztem Propylenoxid und cyclischem Carbonat).

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Alkylenoxide, cyclisches Carbonat, Lösungsmittel) gereinigte Reaktionsmischung wurde am unteren Ende des beheizten Rohres in einer Vorlage aufgefangen. Das erhaltene Produktgemisch wurde durch $^1$H-NMR Spektroskopie (Bestimmung des $CO_2$ Gehaltes im Polymer) und Gelpermeationschromatographie sowie Bestimmung der OH-Zahl, der Viskosität und des Gel-Punktes charakterisiert.

Das Gewichts- und Zahlenmittel des Molekulargewichts der entstandenen Polymere wurden mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Da sich der hydrodynamische Durchmesser der erhaltenen verzweigten Polyethercarbonatpolyole mit dem Verzweigungsgrad ändert, divergiert das aus den eingesetzten Mengen berechnete und das über GPC bestimmte Gewichts- und Zahlenmittel des Molekulargewichts der entstandenen Polymere.

Die OH-Zahl (Hydroxylzahl) wurde in Anlehnung an DIN 53240-2 bestimmt, wobei jedoch *N*-Methylpyrrolidon anstelle von THF/Dichlormethan als Lösungsmittel verwendet wurde. Es wurde mit 0,5 molarer ethanolischer KOH Lösung titriert (Endpunkterkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Polyethercarbonatpolyol].

Das Verhältnis der Menge an cyclischem Propylencarbonat zu Polyethercarbonatpolyol (Selektivität) und das molare Verhältnis von Carbonatgruppen zu Ethergruppen im Polyethercarbonatpolyol (Verhältnis e/f) sowie der Anteil des umgesetzten Propylenoxids (C in mol%) wurden mittels $^1$H-NMR Spektroskopie bestimmt. Die Probe wurde jeweils in deuteriertem Chloroform gelöst und auf einem Spektrometer der Firma Bruker (AV400, 400 MHz) vermessen. Die relevanten Resonanzen im $^1$H-NMR Spektrum (bezogen auf TMS = 0 ppm) sind wie folgt:

I1: 1,11 - 1,17: Methylgruppe der Polyether-Einheiten, Fläche der Resonanz entspricht drei H Atomen

I2: 1,25 - 1,32: Methylgruppe der Polycarbonat-Einheiten, Fläche der Resonanz entspricht drei H Atomen

I3: 1,45 - 1,49: Methylgruppe des cyclischen Carbonats, Fläche der Resonanz entspricht drei H Atomen

I4: 2,95 - 2,99: CH Gruppe für freies, nicht abreagiertes des Propylenoxids, Fläche der Resonanz entspricht einem H Atom

I5: 2,38-2,42: CH Gruppe für freies, nicht abreagiertes des Glycidol, Fläche der Resonanz entspricht einem H Atom

Angegeben sind das Verhältnis der Menge an cyclischem Propylencarbonat zu Polymer (Selektivität, c/l) und das Verhältnis von Carbonatgruppen zu Ethergruppen im Polymer (e/f) sowie der Anteil des umgesetzten Propylenoxids (C in mol%).

Unter Berücksichtigung der relativen Intensitäten wurden die Werte wie folgt berechnet:

Molares Verhältnis der Menge an cyclischem Propylencarbonat zu Polymer (Selektivität, c/l):

$$c/l = I3 / I2$$

Molares Verhältnis von Carbonatgruppen zu Ethergruppen im Polymer (e/f):

$$e/f = I2 / I1$$

Der molare Anteil des umgesetzten Propylenoxids (C in mol%) bezogen auf die Summe der bei der Aktivierung und der Copolymerisation eingesetzten Menge an Propylenoxid, berechnet nach der Formel:

$$C = [((I1/3)+(I2/3)+(I3/3)) / ((I1/3)+(I2/3)+(I3/3)+I4)] * 100\%$$

lag bei den Beispielen >99,9%.

Die Viskosität des Produktgemisches wurde mit einem Rheometer Physica MCR 501 der Firma Anton Paar bei 30°C bestimmt, wobei eine Kugel-Platte-Konfiguration mit einem Kugeldurchmesser von 25 mm mit einem Abstand von 0.05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

Für die rheologische Bestimmung des Gel-Punktes wurden die Polyethercarbonatpolyole mit einer equimolaren Menge an Desmodur N3300 (Hexamethylendiisocyanat-Trimer) und 2000 ppm Dibutylzinnlaurat (2% in Diphenylether) versetzt. Die komplexen Moduli G' (Speichermodul) und G" (Verlustmodul) wurden in einer Oszillationsmessung bei 40°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde definiert als der Zeitpunkt, an dem G' = G" wurde.

**Beispiel 1: Herstellung eines verzweigten Polyethercarbonatpolyols der rechnerischen Funktionalität von 3,0, ausgehend von einer Starterverbindung der Funktionalität von 2,0 unter Einsatz von Glycidol als Verzweigerverbindung zur Erhöhung der Funktionalität**

In einem 300 ml Druckreaktor ausgestattet mit Gaseintragsrührer wurde eine Mischung aus DMC-Katalysator (32 mg) und PET-1 (17,4 g) vorgelegt und 30 min bei 130°C unter leichtem Vakuum (50 mbar) und leichtem Ar-Strom gerührt (800 rpm) [Schritt ($\alpha$)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt ($\beta$)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden

unter Rühren weitere 135,75 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 2,98 g Glycidol über eine separate HPLC-Pumpe (0,03 mL/min) zu dosiert [Schritt (γ)]. Nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 31,8.

Es wurde keine Akkumulation von Glycidol in der Reaktionsmischung erhalten.

Die NMR-spektroskopische Untersuchung des Reaktionsgemisches zeigte einen vollständigen Umsatz des Propylenoxids und des Glycidols.

Die Selektivität c/l betrug 0,08.

Das molare Verhältnis von Carbonatgruppen zu Ethergruppen im Polymer e/f betrug 24,02/7.5,98.

Das über GPC bestimmte Gewichts- und Zahlenmittel des Molekulargewichts des erhaltenen Polyethercarbonats betrug $M_n$ = 4453 g/mol, $M_w$ = 6034 g/mol, die Polydispersität lag bei 1,3.

Die OH Zahl des erhaltenen Gemisches war 35,8 $mg_{KOH}$/g.

Die Viskosität des erhaltenen Gemisches betrug 5351 mPa s.

Die Zeit bis zur Erreichung des Gel-Punktes betrug 15,1 min.

**Beispiel 2: Herstellung eines verzweigten Polyethercarbonatpolyols der rechnerischen Funktionalität von 5,0, ausgehend von einer Starterverbindung der Funktionalität von 2,0 unter Einsatz von Glycidol als Verzweigerverbindung zur Erhöhung der Funktionalität**

In einem 300 ml Druckreaktor ausgestattet mit Gaseintragsrührer wurde eine Mischung aus DMC-Katalysator (32 mg) und PET-1(17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichten der 100°C wurden unter Rühren weitere 129,83 g Propylenoxid über eine HPLC-Pumpe (1,00 mL/min) zu dosiert, wobei die Reaktionsmischung weiterhin gerührt wurde (800 U/min). Fünfzehn Minuten nach Start der Zugabe von Propylenoxid wurden unter Rühren 8,9 g Glycidol über eine separate HPLC-Pumpe (0,09 mL/min) zu dosiert. [Schritt (γ)]. Nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 10,6.

Es wurde keine Akkumulation von Glycidol in der Reaktionsmischung erhalten.

Die NMR-spektroskopische Untersuchung des Reaktionsgemisches zeigte einen vollständigen Umsatz des Propylenoxids und des Glycidols.

Die Selektivität c/l betrug 0,13.

Das molare Verhältnis von Carbonatgruppen zu Ethergruppen im Polymer e/f betrug 79,8/20,2.

Das über GPC bestimmte Gewichts- und Zahlenmittel des Molekulargewichts des erhaltenen Polyethercarbonats betrug $M_n$ = 2156 g/mol, $M_w$ = 3106 g/mol; die Polydispersität lag bei 1,4.

Die OH Zahl des erhaltenen Gemisches war 60,9 $mg_{KOH}$/g.

Die Viskosität des erhaltenen Gemisches betrug 3856 mPa s.

Die Zeit bis zur Erreichung des Gel-Punktes betrug 10,0 min.

**Beispiel 3: Herstellung eines verzweigten Polyethercarbonatpolyols der rechnerischen Funktionalität von 7,0, ausgehend von einer Starterverbindung der Funktionalität von 2,0 unter Einsatz von Glycidol als Verzweigerverbindung zur Erhöhung der Funktionalität**

In einem 300 ml Druckreaktor ausgestattet mit Gaseintragsrührer wurde eine Mischung aus DMC-Katalysator

(32 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)].)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 122,5 g Propylenoxid über eine HPLC-Pumpe (1,00 mL/min) zu dosiert, wobei die Reaktionsmischung weiterhin gerührt wurde (800 U/min). Fünfzehn Minuten nach Start der Zugabe von Propylenoxid wurden unter Rühren 14,90 g Glycidol über eine separate HPLC-Pumpe (0,15 mL/min) zu dosiert. [Schritt (γ)]. Nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 6,4.

Es wurde keine Akkumulation von Glycidol in der Reaktionsmischung erhalten.

Die NMR-spektroskopische Untersuchung des Reaktionsgemisches zeigte einen vollständigen Umsatz des Propylenoxids und des Glycidols.

Die Selektivität c/l betrug 0,14.

Das molare Verhältnis von Carbonatgruppen zu Ethergruppen im Polymer e/f betrug 15,8/84,2.

Das über GPC bestimmte Gewichts- und Zahlenmittel des Molekulargewichts des erhaltenen Polyethercarbonats betrug $M_n$ = 1314 g/mol, $M_w$ = 1996 g/mol; die Polydispersität lag bei 1,5.

Die OH Zahl des erhaltenen Gemisches war 91,7 $mg_{KOH}$/g.

Die Viskosität des erhaltenen Gemisches betrug 2167 mPa s.

Die Zeit bis zur Erreichung des Gel-Punktes betrug 7,5 min.

**Beispiel 4 (Vergleichsbeispiel): Herstellung eines linearen Polyethercarbonats mit einer Funktionalität von 2**

In einem 300 ml Druckreaktor ausgestattet mit Gaseintragsrührer wurde eine Mischung aus DMC-Katalysator (32 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Nach Abkühlen auf 100°C wurden 137,26 g Propylenoxid über eine HPLC-Pumpe (1 mL/min) zudosiert, wobei die Reaktionsmischung weiterhin gerührt wurde (800 rpm) [Schritt (δ)]. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Es wurde kein Glycidol zudosiert.

Die NMR-spektroskopische Untersuchung des Reaktionsgemisches zeigte einen vollständigen Umsatz des Propylenoxids.

Die Selektivität c/l betrug 0,14.

Das molare Verhältnis von Carbonatgruppen zu Ethergruppen im Polymer e/f betrug 18,3/81,7.

Das über GPC bestimmte Gewichts- und Zahlenmittel des Molekulargewichts des erhaltenen Polyethercarbonats betrug $M_n$ = 6631 g/mol, $M_w$ = 10609 g/mol; die Polydispersität lag bei 1,6.

Die OH Zahl des erhaltenen Gemisches war 31,8 $mg_{KOH}$/g.

Die Viskosität des erhaltenen Gemisches betrug 8159 mPa s.

Die Zeit bis zur Erreichung des Gel-Punktes betrug 21,6 min.

**Vergleich von Polyethercarbonatpolyolen hergestellt nach dem erfindungsgemäßen Verfahren mit einem linearen Polyethercarbonatdiol:**

| Beispiel | Funktionalität des Produktes | Viskosität mPa·s | Gelpunkt min |
|---|---|---|---|
| 1 | 3 | 5351 | 15,1 |
| 2 | 5 | 3856 | 10,0 |
| 3 | 7 | 2167 | 7,5 |
| 4 (Vgl.) | 2 | 8159 | 21,6 |
| Vgl.: Vergleichsbeispiel | | | |

Eine Gegenüberstellung der Beispiele 1-3 mit dem Vergleichsbeispiel 4 zeigt, dass die verzweigten Polyethercarbonatpolyole aus den Beispielen 1-3, die unter Verwendung von Glycidol hergestellt wurden, im Vergleich zu dem bifunktionellen Polyethercarbonatdiol aus Beispiel 4 eine niedrigere Viskosität und eine höhere Reaktivität bei der Vernetzung mit Isocyanaten aufweisen. Überraschenderweise sinkt mit steigendem Gehalt an Verzweigerverbindung (höhere Funktionalität) die Viskosität, während die Reaktivität zunimmt.

**Beispiel 5: Herstellung eines verzweigten Polyethercarbonatpolyols der rechnerischen Funktionalität von 2,8, ausgehend von einer Starterverbindung der Funktionalität von 2,0 unter Einsatz von Glycidol als Verzweigerverbindung zur Erhöhung der Funktionalität**

In einem 300 ml Druckreaktor ausgestattet mit Gaseintragsrührer wurde eine Mischung aus DMC-Katalysator (24 mg), PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,65 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichten der 100°C wurden unter Rühren weitere 75,83 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 2,66 g Glycidol über eine separate HPLC-Pumpe (0,09 mL/min) zu dosiert [Schritt (γ)]. Nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 10,6.

Es wurde keine Akkumulation von Glycidol in der Reaktionsmischung erhalten.

Die NMR-spektroskopische Untersuchung des Reaktionsgemisches zeigte einen vollständigen Umsatz des Propylenoxids und des Glycidols.

Die Selektivität c/l betrug 0,07.

Das molare Verhältnis von Carbonatgruppen zu Ethergruppen im Polymer e/f betrug 19,3/80,7.

Das über GPC bestimmte Gewichts- und Zahlenmittel des Molekulargewichts des erhaltenen Polyethercarbonats betrug $M_n$ = 2701 g/mol, $M_w$ = 3517 g/mol; die Polydispersität lag bei 1,3.

Die OH Zahl des erhaltenen Gemisches war 57,3 $mg_{KOH}$/g.

Die Viskosität des erhaltenen Gemisches betrug 2330 mPa s.

Die Zeit bis zur Erreichung des Gel-Punktes betrug 7,1 min.

**Beispiel 6 (Vergleichsbeispiel): Herstellung eines Polyethercarbonats mit einer Funktionalität von 2,8 ausgehend von einer Mischung aus Starterverbindungen der Funktionalität 2,0 und 3,0**

In einem 300 ml Druckreaktor ausgestattet mit Gaseintragsrührer wurde eine Mischung aus DMC-Katalysator (23mg), PET-1 (3,48 g) und PET-2 (13,44 g) vorgelegt und 30 min bei 130°C unter leichtem Vakuum (50 mbar) und

leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,65 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,65 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Nach Abkühlen auf 100°C wurden 91,66 g Propylenoxid über eine HPLC-Pumpe (1 mL/min) zudosiert, wobei die Reaktionsmischung weiterhin gerührt wurde (800 rpm) [Schritt (δ)]. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Es wurde kein Glycidol zudosiert.

Die NMR-spektroskopische Untersuchung des Reaktionsgemisches zeigte einen vollständigen Umsatz des Propylenoxids.

Die Selektivität c/l betrug 0,11.

Das molare Verhältnis von Carbonatgruppen zu Ethergruppen im Polymer e/f betrug 16,7/83,3.

Das über GPC bestimmte Gewichts- und Zahlenmittel des Molekulargewichts des erhaltenen Polyethercarbonats betrug $M_n$ = 3949 g/mol, $M_w$ = 4720 g/mol; die Polydispersität lag bei 1,2.

Die OH Zahl des erhaltenen Gemisches war 52,0 $mg_{KOH}$/g.

Die Viskosität des erhaltenen Gemisches betrug 3911mPa s.

Die Zeit bis zur Erreichung des Gel-Punktes betrug 8,2 min.

**Vergleich eines Polyethercarbonatpolyols hergestellt nach dem erfindungsgemäßen Verfahren mit einem Polyethercarbonatpolyol erhalten durch Einsatz einer Mischung aus Starterverbindungen unterschiedlicher Funktionalität:**

| Beispiel | Funktionalität des Produktes | Viskosität mPa·s | Gelpunkt min |
|---|---|---|---|
| 5 | 2,8 | 2330 | 7,1 |
| 6 (Vgl.) | 2,8 | 3911 | 8,2 |
| Vgl.: Vergleichsbeispiel | | | |

Eine Gegenüberstellung des Beispiels 5 mit dem Vergleichsbeispiel 6 zeigt, dass die verzweigten Polyethercarbonatpolyole aus Beispiel 5, die unter Verwendung von Glycidol hergestellt wurde, im Vergleich zu der Mischung aus Beispiel 6, die unter Verwendung von Starterverbindungen unterschiedlicher Funktionalität hergestellt wurde, eine niedrigere Viskosität und eine höhere Reaktivität bei der Vernetzung mit Isocyanaten aufweist.

**Beispiel 7: Herstellung eines verzweigten Polyethercarbonatpolyols der rechnerischen Funktionalität von 3,0, ausgehend von einer Starterverbindung der Funktionalität von 2,0 unter Einsatz von Glycidol als Verzweigerverbindung zur Erhöhung der Funktionalität**

In einem 300 ml Druckreaktor ausgestattet mit Gaseintragsrührer wurde eine Mischung aus DMC-Katalysator (22 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 80,73 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 2,96 g Glycidol über eine separate HPLC-Pumpe (0,15 mL/min) zu dosiert [Schritt (γ)]. Nach Ende der Zugabe von Propylenoxid und Glycidol wurde die Reaktionsmischung noch weitere 2 h bei 100°C gerührt. Durch Abkühlen des

Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 6,4.

Es wurde keine Akkumulation von Glycidol in der Reaktionsmischung erhalten.

Die NMR-spektroskopische Untersuchung des Reaktionsgemisches zeigte einen vollständigen Umsatz des Propylenoxids und des Glycidols.

Die Selektivität c/l betrug 0,07.

Das molare Verhältnis von Carbonatgruppen zu Ethergruppen im Polymer e/f betrug 18,8/81,2.

Das über GPC bestimmte Gewichts- und Zahlenmittel des Molekulargewichts des erhaltenen Polyethercarbonats betrug $M_n$ = 1928 g/mol, $M_w$ = 2678 g/mol; die Polydispersität lag bei 1,3.

Die OH Zahl des erhaltenen Gemisches war 60,7 $mg_{KOH}$/g.

Die Viskosität des erhaltenen Gemisches betrug 2430 mPa s.

Die Zeit bis zur Erreichung des Gel-Punktes betrug 5,1 min.

**Beispiel 8 (Vergleichsbeispiel): Herstellung eines Polyethercarbonats mit einer Funktionalität von 3 unter Einsatz einer trifunktionellen Starterverbindung**

In einem 300 ml Druckreaktor ausgestattet mit Gaseintragsrührer wurde eine Mischung aus DMC-Katalysator (20,1 mg) und PET-2 (16,8 g) vorgelegt und 30 min bei 130°C unter leichtem Vakuum (50 mbar) und leichtem Ar-Strom gerührt (800 rpm) [Schritt ($\alpha$)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,65 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,65 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt ($\beta$)]. Nach Abkühlen auf 100°C wurden 79,2 g Propylenoxid über eine HPLC-Pumpe (1 mL/min) zudosiert, wobei die Reaktionsmischung weiterhin gerührt wurde (800 rpm) [Schritt ($\delta$)]. Nach Ende der Zugabe von Propylenoxid wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Es wurde kein Glycidol zudosiert.

Die NMR-spektroskopische Untersuchung des Reaktionsgemisches zeigte einen vollständigen Umsatz des Propylenoxids.

Die Selektivität c/l betrug 0,11.

Das molare Verhältnis von Carbonatgruppen zu Ethergruppen im Polymer e/f betrug 18,4/81,6.

Das über GPC bestimmte Gewichts- und Zahlenmittel des Molekulargewichts des erhaltenen Polyethercarbonats betrug $M_n$ = 4118 g/mol, $M_w$ = 5200 g/mol; die Polydispersität lag bei 1,3.

Die OH Zahl des erhaltenen Gemisches war 57,1 $mg_{KOH}$/g.

Die Viskosität des erhaltenen Gemisches betrug 2969 mPa s.

Die Zeit bis zur Erreichung des Gel-Punktes betrug 6,3 min.

**Vergleich eines Polyethercarbonatpolyols hergestellt nach dem erfindungsgemäßen Verfahren mit einem Polyethercarbonatpolyol erhalten durch Einsatz einer Mischung aus Starterverbindungen unterschiedlicher Funktionalität:**

| Beispiel | Funktionalität des Produktes | Viskosität mPa·s | Gelpunkt min |
|---|---|---|---|
| 7 | 3 | 2430 | 5,1 |
| 8 (Vgl.) | 3 | 2969 | 6,3 |
| Vgl.: Vergleichsbeispiel | | | |

Eine Gegenüberstellung des Beispiels 7 mit dem Vergleichsbeispiel 8 zeigt, dass das verzweigte Polyethercarbonatpolyol aus Beispiel 7, das unter Verwendung von Glycidol hergestellt wurde, im Vergleich zu der Mischung aus Beispiel 8, die unter Verwendung von Starterverbindungen unterschiedlicher Funktionalität hergestellt wurde, eine niedrigere Viskosität und eine höhere Reaktivität bei der Vernetzung mit Isocyanaten aufweist.

**Beispiel 9 (Vergleichsbeispiel): Herstellung eines verzweigten Polyethercarbonatpolyols der rechnerischen Funktionalität von 3,0, ausgehend von einer Starterverbindung der Funktionalität von 2,0 unter Einsatz von Glycidol als Verzweigerverbindung zur Erhöhung der Funktionalität bei erhöhter Zugabegeschwindigkeit von Glycidol während Schritt (γ)**

In einem 300 ml Druckreaktor ausgestattet mit Gaseintragsrührer wurde eine Mischung aus DMC-Katalysator (32 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 97,24 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 2,98 g Glycidol über eine separate HPLC-Pumpe (10 mL/min) zu dosiert [Schritt (γ)]. Nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 0,1.

Der Mengenanteil an zudosiertem Glycidol betrug zu dem Zeitpunkt, an dem die Zugabe von Glycidol beendet wurde, 7,8 Gew.-% (2,98 g Glycidol bezogen auf die Summe aus 17,4 g Starterverbindung, 3 mal 1,75 g Propylenoxid, 12,7 g Propylenoxid aus Schritt (γ) und 2,98 g Glycidol).

Die NMR-spektroskopische Untersuchung des Reaktionsgemisches zeigte, dass der überwiegende Teil des eingesetzten Propylenoxids und des Glycidols nicht umgesetzt waren. Das gewünschte Polymer wurde nicht erhalten.

**Vergleich der Herstellung von Polyethercarbonatpolyolen unter Variation der Zugabegeschwindigkeit des Glycidols:**

| Beispiel | Zugabegeschwindigkeit ml·min | Viskosität mPa·s | Gelpunkt min |
|---|---|---|---|
| 7 | 0,15 | 2430 | 5,1 |
| 9 (Vgl.) | 10,0 | --- | --- |
| Vgl.: Vergleichsbeispiel | | | |

Eine Gegenüberstellung des Beispiels 7 mit dem Vergleichsbeispiel 9 zeigt, dass bei zu hoher Zugabegeschwindigkeit des Glycidols kein Produkt erhalten wird.

**Beispiel 10 (Vergleichsbeispiel): Herstellung eines verzweigten Polyethercarbonatpolyols der rechnerischen Funktionalität von 3,0, ausgehend von einer Starterverbindung der Funktionalität von 2,0 unter Einsatz von Glycidol als Verzweigerverbindung zur Erhöhung der Funktionalität unter Zugabe von Glycidol während Schritt (β)**

In einem 300 ml Druckreaktor ausgestattet mit Gaseintragsrührer wurde eine Mischung aus DMC-Katalysator (32 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) und 0,98 g Glycidol über eine separate HPLC-Pumpe (0,43 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) und gleichzeitig 0,98 g Glycidol über eine separate HPLC-Pumpe (0,43 mL/min) zudosiert und die Reaktionsmischung nach jeder Zugabe für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 97,38 g Propylenoxid über eine HPLC-Pumpe (1 mL/min) zu dosiert, wobei die Reaktionsmischung weiterhin gerührt wurde (800 U/min). Fünfzehn Minuten nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Die Zugabe von Glycidol erfolgte in Schritt (β). Das molare Verhältnis der Zugabegeschwindigkeit von Propylenoxid zu der Zugabegeschwindigkeit von Glycidol betrug 2,2.

Der Mengenanteil an zudosiertem Glycidol am Ende von Schritt (β) betrug 11,5 Gew.-% (3 mal 0,98 g Glycidol bezogen auf die Summe aus 17,4 g Starterverbindung, 3 mal 1,75 g Propylenoxid und 3 mal 0,98 g Glycidol).

Die NMR-spektroskopische Untersuchung des Reaktionsgemisches zeigte, dass das eingesetzte Propylenoxid und das Glycidol nicht umgesetzt waren.

**Vergleich der Herstellung von Polyetherearbonatpolyolen unter Variation des Zugabezeitpunktes von Glycidol:**

| Beispiel | Zugabezeitpunkt | Viskosität mPa·s | Gelpunkt min |
|---|---|---|---|
| 7 | In Schritt (γ) | 2430 | 5,1 |
| 10 (Vgl.) | In Schritt (β) | --- | --- |
| Vgl.: Vergleichsbeispiel | | | |

Eine Gegenüberstellung des Beispiels 7 mit dem Vergleichsbeispiel 10 zeigt, dass bei Zugabe des Glycidols während der Aktivierungsphase des Katalysators (Schritt(β)) kein Produkt erhalten wird.

**Beispiel 11 (Vergleichsbeispiel): Herstellung eines verzweigten Polyethercarbonatpolyols der rechnerischen Funktionalität von 3,0, ausgehend von einer Starterverbindung der Funktionalität von 2,0 unter Einsatz von Glycidol als Verzweigerverbindung zur Erhöhung der Funktionalität ohne Zugabe eines Alkylenoxids**

In einem 300 ml Druckreaktor ausgestattet mit Gaseintragsrührer wurde eine Mischung aus DMC-Katalysator (32 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 0,18 g Glycidol mit Hilfe einer HPLC-Pumpe (0,03 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 0,18 g Glycidol mit Hilfe der HPLC-Pumpe (0,03 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichten der 100°C wurden unter Rühren weitere 2,44 g Glycidol über eine HPLC-Pumpe (0,03 mL/min) zu dosiert, wobei die Reaktionsmischung weiterhin gerührt wurde (800 U/min). Fünfzehn Minuten nach Ende der Zugabe von Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Es wurde kein Propylenoxid zudosiert.

Der Mengenanteil an zudosiertem Glycidol am Ende von Schritt (β) betrug 14,6 Gew.-% (3 mal 0,18 g plus 2,44 g Glycidol bezogen auf die Summe aus 17,4 g Starterverbindung und 3 mal 0,18 g plus 2,44 g Glycidol).

Die NMR-spektroskopische Untersuchung des Reaktionsgemisches zeigte, dass das eingesetzte Glycidol nicht umgesetzt war.

**Vergleich der Herstellung von Polyetherearbonatpolyolen unter Variation der eingesetzten Menge an Glycidol:**

| Beispiel | Eingesetzte Alkylenoxide und Verzweigerverbindungen | Viskosität mPa·s | Gelpunkt min |
|---|---|---|---|
| 7 | PO und Glycidol | 2430 | 5,1 |

(fortgesetzt)

| Beispiel | Eingesetzte Alkylenoxide und Verzweigerverbindungen | Viskosität mPa·s | Gelpunkt min |
|---|---|---|---|
| 11 (Vgl.) | Glycidol | --- | --- |
| Vgl.: Vergleichsbeispiel | | | |

Eine Gegenüberstellung des Beispiels 7 mit dem Vergleichsbeispiel 11 zeigt, dass bei Einsatz von Glycidol ohne gleichzeitige Zugabe eines Alkylenoxids kein Produkt erhalten wird.

**Beispiel 12: Herstellung eines verzweigten Polyethercarbonatpolyols der rechnerischen Funktionalität von 4, ausgehend von einer Starterverbindung der Funktionalität von 2,0 unter Einsatz von Glycerindiglycidylether als Verzweigerverbindung zur Erhöhung der Funktionalität**

In einem 300 ml Druckreaktor ausgestattet mit Gaseintragsrührer wurde eine Mischung aus DMC-Katalysator (26 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 104,2 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 4.4 g Glycerindiglycidylethers über eine separate HPLC-Pumpe (0,09 mL/min) zu dosiert [Schritt (γ)]. Nach Ende der Zugabe von Propylenoxid und Glycerindiglycidylethers wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycerindiglycidylether betrug 28,2.

Es wurde keine Akkumulation des Glycerindiglycidylethers in der Reaktionsmischung erhalten.

Die NMR-spektroskopische Untersuchung des Reaktionsgemisches zeigte einen vollständigen Umsatz des Propylenoxids und des Glycerindiglycidylethers.

Die Selektivität c/1 betrug 0,06.

Das molare Verhältnis von Carbonatgruppen zu Ethergruppen im Polymer e/f betrug 22,5/77,5.

Das über GPC bestimmte Gewichts- und Zahlenmittel des Molekulargewichts des erhaltenen Polyethercarbonats betrug $M_n$ = 4489 g/mol, $M_w$ = 8558 g/mol; die Polydispersität lag bei 1,9.

Die OH Zahl des erhaltenen Gemisches war 31,3 $mg_{KOH}$/g.

Die Viskosität des erhaltenen Gemisches betrug 19700 mPa s.

Die Zeit bis zur Erreichung des Gel-Punktes betrug 8,0 min.

**Beispiel 13: Herstellung eines verzweigten Polyethercarbonatpolyols der rechnerischen Funktionalität von 3, ausgehend von einer Starterverbindung der Funktionalität von 2,0 unter Einsatz von 3-Ethyl-3-oxetanemethanol als Verzweigerverbindung zur Erhöhung der Funktionalität**

In einem 300 ml Druckreaktor ausgestattet mit Gaseintragsrührer wurde eine Mischung aus DMC-Katalysator (36 mg) und PET-1 (17,4 g) vorgelegt und 30 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,75 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 1,75 g Propylenoxid mit Hilfe der HPLC-Pumpe (1 ml/min) zudosiert und die Reaktionsmischung für 20 min gerührt

(800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 132,56 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 4.66 g 3-Ethyl-3-oxetanemethanol über eine separate HPLC-Pumpe (0,09 mL/min) zu dosiert [Schritt (γ)]. Nach Ende der Zugabe von Propylenoxid und 3-Ethyl-3-oxetanemethanol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von 3-Ethyl-3-oxetanemethanol betrug 18,1.

Es wurde keine Akkumulation des 3-Ethyl-3-oxetanemethanols in der Reaktionsmischung erhalten.

Die NMR-spektroskopische Untersuchung des Reaktionsgemisches zeigte vollständigen Umsatz des Propylenoxids und des 3-Ethyl-3-oxetanemethanols.

Die Selektivität c/l betrug 0,11.

Das molare Verhältnis von Carbonatgruppen zu Ethergruppen im Polymer e/f betrug 18,5/81,5.

Das über GPC bestimmte Gewichts- und Zahlenmittel des Molekulargewichts des erhaltenen Polyethercarbonats betrug $M_n$ = 2793 g/mol, $M_w$ = 4038 g/mol, die Polydispersität lag bei 1,4.

Die OH Zahl des erhaltenen Gemisches war 40,1 $mg_{KOH}$/g.

Die Viskosität des erhaltenen Gemisches betrug 2423 mPa s.

Die Zeit bis zur Erreichung des Gel-Punktes betrug 16,2 min.

**Beispiel 14: Herstellung eines verzweigten Polyethercarbonatpolyols der rechnerischen Funktionalität von 3,0, ausgehend von einer difunktionellen Säure als Starterverbindung unter Einsatz von Glycidol als Verzweigerverbindung zur Erhöhung der Funktionalität**

In einem 300 ml Druckreaktor ausgestattet mit Gaseintragsrührer wurde eine Mischung aus DMC-Katalysator (120 mg) und hydrierte Dimerfettsäure (22,8 g) vorgelegt und 45 min bei 130°C unter leichtem Vakuum (50 mbar) und leichtem Ar-Strom gerührt (800 rpm) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 2,3 g Propylenoxid mit Hilfe einer HPLC-Pumpe (1 mL/min) zu dosiert und die Reaktionsmischung für 20 min gerührt (800 rpm). Auftreten einer kurzzeitig erhöhten Wärmeentwicklung im Reaktor während dieser Zeit zeigte die Aktivierung des Katalysators an. Anschließend wurden noch zwei weitere mal 2,3 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor während dieser Zeit bestätigte die Aktivierung des Katalysators [Schritt (β)]. Die Temperatur wurde auf 100°C geregelt und während der nachfolgenden Schritte der Druck im Reaktor durch Nachdosieren von $CO_2$ bei 15 bar gehalten. Nach Erreichen der 100°C wurden unter Rühren weitere 135,75 g Propylenoxid über eine HPLC-Pumpe (1 mL/min) zu dosiert, wobei die Reaktionsmischung weiterhin gerührt wurde (800 U/min). Fünfzehn Minuten nach Beginn der Zugabe von Propylenoxid wurden unter Rühren 2,98 g Glycidol über eine separate HPLC-Pumpe (0,09 mL/min) zu dosiert [Schritt (γ)]. Nach Ende der Zugabe von Propylenoxid und Glycidol wurde die Reaktionsmischung noch weitere 2 h bei 100°C gerührt. Durch Abkühlen des Reaktors im Eisbad wurde die Reaktion beendet, der Überdruck wurde abgelassen und das resultierende Produkt analysiert.

Das molare Verhältnis der Zugabegeschwindigkeit von Propylenoxid zu der Zugabegeschwindigkeit von Glycidol betrug 10,6.

Es wurde keine Akkumulation von Glycidol in der Reaktionsmischung erhalten.

Die NMR-spektroskopische Untersuchung des Reaktionsgemisches zeigte einen vollständigen Umsatz des Propylenoxids und des Glycidols.

Die Selektivität c/l betrug 0,38.

Das molare Verhältnis von Carbonatgruppen zu Ethergruppen im Polymer e/f betrug 16,7/83,3.

Das über GPC bestimmte Gewichts- und Zahlenmittel des Molekulargewichts des erhaltenen Polyethercarbonats betrug $M_n$ = 2585 g/mol, $M_w$ = 3688 g/mol; die Polydispersität lag bei 1,4.

Die OH Zahl des erhaltenen Gemisches war 47,6 $mg_{KOH}$/g.

Die Viskosität des erhaltenen Gemisches betrug 3577 mPa s.

Die Zeit bis zur Erreichung des Gel-Punktes betrug 12,7 min.

**Vergleich der Herstellung von Polyethercarbonatpolyolen nach dem erfindungsgemäßen Verfahren unter Einsatz unterschiedlicher Verzweigerverbindungen:**

| Beispiel | Eingesetzte Starterverbindung | Eingesetzte Verzweigerverbindungen | Funktionalität F | Viskosität mPa·s | Gelpunkt min |
|---|---|---|---|---|---|
| 7 | PET-1 | Glycidol | 3 | 2430 | 5,1 |
| 12 | PET-1 | Glycerindiglycidylether | 4 | 19700 | 8,0 |
| 13 | PET-1 | 3-Ethyl-3-oxetanemethanol | 3 | 2423 | 16,2 |
| 14 | Dimerfettsäure | Glycidol | 3 | 3577 | 12,7 |

Die Beispiele 7, 12-14 zeigen, dass verzweigte Polyethercarbonate unterschiedlicher Funktionalität unter Einsatz unterschiedlicher Starterverbindungen und unterschiedlicher Verzweigerverbindungen erhalten werden können.

## Patentansprüche

**1.** Verfahren zur Herstellung verzweigter Polyethercarbonatpolyole, umfassend den Schritt der Umsetzung eines Alkylenoxids und Kohlendioxid mit einer H-funktionellen Starterverbindung in Gegenwart eines Katalysators,
**dadurch gekennzeichnet, dass**
die Umsetzung weiterhin in Gegenwart einer Verzweigerverbindung durchgeführt wird, welche eine durch Ringöffnung polymerisierbare funktionelle Gruppe sowie eine H-funktionelle Gruppe umfasst und
wobei die Verzweigerverbindung während der Umsetzung derart hinzugefügt wird, dass der Anteil der Verzweigerverbindung im erhaltenen Reaktionsgemisch zu jedem Zeitpunkt während des Hinzufügens $\leq$ 7,5 Gewichts-%, bezogen auf die Menge an zu diesem Zeitpunkt zugegebener H-funktioneller Starterverbindung, Alkylenoxid und Verzweigerverbindung, beträgt.

**2.** Verfahren gemäß Anspruch 1, umfassend die Schritte:

(α) Vorlegen des Katalysators und:

- eines Suspensionsmittels, das keine H-funktionellen Gruppen enthält und/oder
- der H-funktionellen Starterverbindung

(γ) Zudosieren von Kohlendioxid, des Alkylenoxids und der Verzweigerverbindung,

wobei weiterhin für den Fall, dass in Schritt (α) keine H-funktionelle Starterverbindung vorgelegt wurde, Schritt (γ) das Zudosieren der H-funktionellen Starterverbindung umfasst.

**3.** Verfahren nach Anspruch 2, weiterhin umfassend den Schritt (β) zwischen Schritt (α) und Schritt (γ):

(β) Zudosieren eines Alkylenoxids, welches gleich oder verschieden zu dem Alkylenoxid ist, welches in Schritt (γ) eingesetzt wird

**4.** Verfahren nach einem der vorhergehenden Ansprüche, wobei die Zugabe der Verzweigerverbindung abgeschlossen ist, bevor 50 mol% der Gesamtmenge des Alkylenoxids in dieser Umsetzung zugegeben wurden.

**5.** Verfahren nach einem der Ansprüche 1 bis 3, wobei mit der Zugabe der Verzweigerverbindung begonnen wird, nachdem 50 mol% der Gesamtmenge des Alkylenoxids in dieser Umsetzung zugegeben wurden.

**6.** Verfahren nach einem der Ansprüche 2 bis 5, wobei wenigstens der Schritt (γ) kontinuierlich durchgeführt wird.

**7.** Verfahren nach einem der Ansprüche 2 bis 6, wobei Schritt (γ) ein kontinuierliches Zudosieren der H-funktionellen Starterverbindung umfasst.

**8.** Verfahren nach einem der Ansprüche 2 bis 6, wobei Schritt (γ) ein diskontinuierliches Zudosieren der H-funktionellen Starterverbindung umfasst.

**9.** Verfahren nach einem der vorhergehenden Ansprüche, wobei als Alkylenoxid Ethylenoxid und/oder Propylenoxid eingesetzt werden.

**10.** Verfahren nach einem der vorhergehenden Ansprüche, wobei als Starterverbindung Polyetherpolyole und/oder oligomerisierte Fettsäuren eingesetzt werden.

**11.** Verfahren nach einem der vorhergehenden Ansprüche, wobei der Katalysator ein DMC-Katalysator ist.

**12.** Verfahren nach einem der vorhergehenden Ansprüche, wobei die Verzweigerverbindung ausgewählt ist aus der Gruppe der Glycidalkohole, der Oxetanalkohole, der Monoglycidylether von Diolen, der Mono- oder Diglycidylether von Triolen, der unsubstituierten oder substituierten 3-Hydroxyalkyloxetane und/oder der Verbindungen gemäß der nachfolgenden Formel:

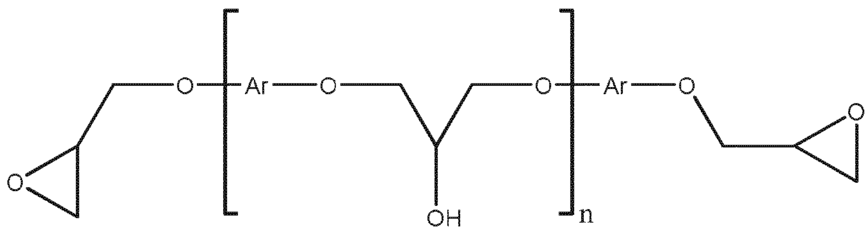

wobei Ar ein divalenter aromatischer, araliphatischer, cycloalphatischer oder aliphatischer Rest mit 5 bis 22 Kohlenstoffatomen sein kann, der auch Heteroatome wie Sauerstoff oder Schwefel enthalten kann und n eine natürliche Zahl von 1 bis 10 ist.

**13.** Verfahren nach einem der vorhergehenden Ansprüche, wobei in einem zusätzlichen, nachfolgenden Verfahrensschritt das erhaltene Polyethercarbonatpolyol mit Di- und/oder Polyisocyanaten zur Reaktion gebracht wird.

**14.** Polyethercarbonatpolyol, erhältlich nach einem Verfahren gemäß einem der Ansprüche 1 bis 12.

**15.** Vernetztes Polyethercarbonat-Polymer, erhältlich nach einem Verfahren gemäß Anspruch 13.

## Claims

**1.** Process for preparing branched polyethercarbonate polyols, comprising the step of reacting an alkylene oxide and carbon dioxide with an H-functional starter compound in the presence of a catalyst,
**characterized in that**
the reaction is additionally conducted in the presence of a branching compound comprising a functional group polymerizable by ring opening and an H-functional group and
wherein the branching compound is added during the reaction in such a way that the proportion of branching compound in the reaction mixture obtained is ≤ 7.5% by weight at any time during the addition, based on the amount of H-functional starter compound, alkylene oxide and branching compound added at this time.

**2.** Process according to Claim 1, comprising the steps of:

(α) initially charging the catalyst and:

- a suspension medium which contains no H-functional groups and/or
- the H-functional starter compound

(γ) metering in carbon dioxide, the alkylene oxide and the branching compound, wherein, additionally, if no H-functional starter compound has been initially charged in step (a), step (γ) comprises the metering-in of the H-functional starter compound.

**3.** Process according to Claim 2, further comprising step (β) between step (α) and step (γ):

(β) metering in an alkylene oxide which is the same as or different than the alkylene oxide which is used in step (γ).

**4.** Process according to any of the preceding claims, wherein the addition of the branching compound is complete before 50 mol% of the total amount of the alkylene oxide in this reaction has been added.

**5.** Process according to any of Claims 1 to 3, wherein the addition of the branching compound is commenced after 50 mol% of the total amount of the alkylene oxide in this reaction has been added.

**6.** Process according to any of Claims 2 to 5, wherein at least step (γ) is conducted continuously.

**7.** Process according to any of Claims 2 to 6, wherein step (γ) comprises a continuous metered-addition of the H-functional starter compound.

**8.** Process according to any of Claims 2 to 6, wherein step (γ) comprises a discontinuous metered addition of the H-functional starter compound.

**9.** Process according to any of the preceding claims, wherein the alkylene oxide used is ethylene oxide and/or propylene oxide.

**10.** Process according to any of the preceding claims, wherein the starter compound used comprises polyether polyols and/or oligomerized fatty acids.

**11.** Process according to any of the preceding claims, wherein the catalyst is a DMC catalyst.

**12.** Process according to any of the preceding claims, wherein the branching compound is selected from the group of the glycidyl alcohols, the oxetane alcohols, the monoglycidyl ethers of diols, the mono- or diglycidyl ethers of triols, the unsubstituted or substituted 3-hydroxyalkyloxetanes and/or the compounds of the following formula:

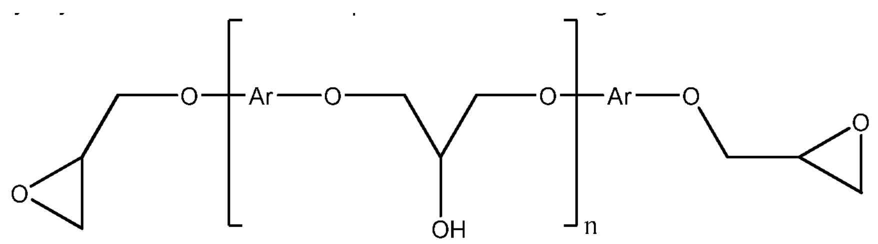

where Ar may be a divalent aromatic, araliphatic, cycloaliphatic or aliphatic radical which has 5 to 22 carbon atoms and may also contain heteroatoms such as oxygen or sulfur and n is a natural number from 1 to 10.

**13.** Process according to any of the preceding claims, wherein the polyethercarbonate polyol obtained is reacted with di- and/or polyisocyanates in an additional subsequent process step.

**14.** Polyethercarbonate polyol obtainable by a process according to any of Claims 1 to 12.

**15.** Crosslinked polyethercarbonate polymer obtainable by a process according to Claim 13.

## Revendications

**1.** Procédé de fabrication de polyéther-carbonate-polyols ramifies, comprenant l’étape de mise en réaction d’un oxyde d’alkylène et de dioxyde de carbone avec un composé de départ à fonction H en présence d’un catalyseur,
**caractérisé en ce que**
la réaction est également réalisée en présence d’un composé de ramification, qui comprend un groupe fonctionnel polymérisable par ouverture de cycle et un groupe à fonction H, et
le composé de ramification étant ajouté pendant la réaction de sorte que la proportion du composé de ramification

dans le mélange réactionnel obtenu à tout moment pendant l'ajout soit ≤ 7,5 % en poids, par rapport à la quantité de composé de départ à fonction H, d'oxyde d'alkylène et de composé de ramification ajoutés à ce moment.

**2.** Procédé selon la revendication 1, comprenant les étapes :

(α) le chargement du catalyseur et :

- d'un agent de suspension qui ne contient pas de groupes à fonction H et/ou
- du composé de départ à fonction H,

(γ) l'ajout de dioxyde de carbone, de l'oxyde d'alkylène et du composé de ramification,

lorsqu'aucun composé de départ à fonction H n'est chargé à l'étape (α), l'étape (γ) comprenant l'ajout du composé de départ à fonction H.

**3.** Procédé selon la revendication 2, comprenant en outre l'étape (β) entre l'étape (α) et l'étape (γ) :

(β) l'ajout d'un oxyde d'alkylène, qui est identique ou différent de l'oxyde d'alkylène qui est utilisé à l'étape (γ).

**4.** Procédé selon l'une quelconque des revendications précédentes, dans lequel l'ajout du composé de ramification est terminé avant que 50 % en moles de la quantité totale de l'oxyde d'alkylène n'ait été ajoutée dans cette réaction.

**5.** Procédé selon l'une quelconque des revendications 1 à 3, dans lequel l'ajout du composé de ramification est débuté après que 50 % en moles de la quantité totale d'oxyde d'alkylène ait été ajoutée dans cette réaction.

**6.** Procédé selon l'une quelconque des revendications 2 à 5, dans lequel au moins l'étape (γ) est réalisée en continu.

**7.** Procédé selon l'une quelconque des revendications 2 à 6, dans lequel l'étape (γ) comprend un ajout continu du composé de départ à fonction H.

**8.** Procédé selon l'une quelconque des revendications 2 à 6, dans lequel l'étape (γ) comprend un ajout discontinu du composé de départ à fonction H.

**9.** Procédé selon l'une quelconque des revendications précédentes, dans lequel de l'oxyde d'éthylène et/ou de l'oxyde de propylène sont utilisés en tant qu'oxyde d'alkylène.

**10.** Procédé selon l'une quelconque des revendications précédentes, dans lequel des polyéther-polyols et/ou des acides gras oligomérisés sont utilisés en tant que composé de départ.

**11.** Procédé selon l'une quelconque des revendications précédentes, dans lequel le catalyseur est un catalyseur DMC.

**12.** Procédé selon l'une quelconque des revendications précédentes, dans lequel le composé de ramification est choisi dans le groupe constitué par les alcools glycidyliques, les alcools oxétanyliques, les éthers monoglycidyliques de diols, les éthers mono- ou diglycidyliques de triols, les 3-hydroxyalkyloxétanes non substitués ou substitués et/ou les composés selon la formule suivante :

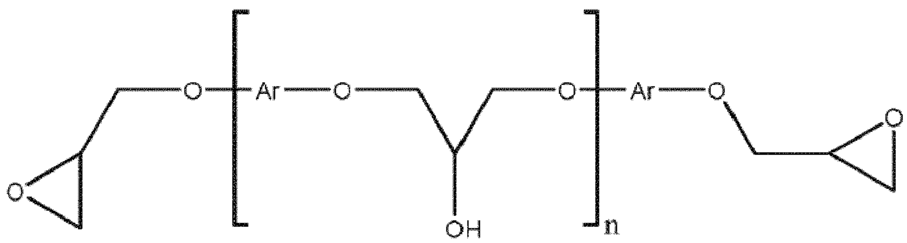

dans laquelle Ar peut être un radical bivalent aromatique, araliphatique, cycloaliphatique ou aliphatique de 5 à 22 atomes de carbone, qui peut également contenir des hétéroatomes tels que l'oxygène ou le soufre, et n est un nombre naturel de 1 à 10.

**13.** Procédé selon l'une quelconque des revendications précédentes, dans lequel, lors d'une étape de procédé ultérieure supplémentaire, le polyéther-carbonate-polyol obtenu est mis en réaction avec des di- et/ou polyisocyanates.

**14.** Polyéther-carbonate-polyol, pouvant être obtenu par un procédé selon l'une quelconque des revendications 1 à 12.

**15.** Polymère de polyéther-carbonate réticulé, pouvant être obtenu par un procédé selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20100048935 A1
- WO 2006103213 A1
- WO 2012130760 A
- EP 12181907 A
- GB 1586520 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A1
- WO 9816310 A1
- WO 0047649 A1
- JP 4145123 B
- WO 9740086 A
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- *Chemical Communications,* 2011, vol. 47, 141-163